# EUROPÄISCHE PATENTSCHRIFT

(11) **EP 3 042 119 B1**
(45) Veröffentlichungstag und Bekanntmachung des Hinweises auf die Patenterteilung: **15.11.2017**
(21) Anmeldenummer: 14777489.7
(22) Anmeldetag: 28.08.2014
(51) Int. Cl.: F21S 8/10

(54) **OPTISCHE STRUKTUR MIT EINER MIKROSTRUKTUR MIT QUADRATISCHER STREUFUNKTION**
OPTICAL STRUCTURE HAVING A MICROSTRUCTURE WITH A QUADRATIC DIFFUSION FUNCTION
STRUCTURE OPTIQUE COMPRENANT UNE MICROSTRUCTURE À FONCTION DE DISPERSION QUADRATIQUE

(30) Priorität: 03.09.2013 AT 505432013
(43) Veröffentlichungstag der Anmeldung: 13.07.2016
(73) Patentinhaber: ZKW Group GmbH, 3250 Wieselburg (AT)
(72) Erfinder: MOSER, Andreas, A-3350 Haag (AT); KIESLINGER, Dietmar, A-2604 Theresienfeld (AT); PÜRSTINGER, Josef, A-3250 Wieselburg (AT)
(74) Vertreter: Patentanwaltskanzlei Matschnig & Forsthuber OG
(86) Internationale Anmeldenummer: PCT/AT2014/050190
(87) Internationale Veröffentlichungsnummer: WO 2015/031925

(56) Entgegenhaltungen:
- EP-A1- 2 680 047
- EP-A2- 2 306 074
- EP-A2- 2 587 125
- DE-A1-102007 063 569
- DE-A1-102008 023 551
- DE-A1-102009 020 593
- DE-A1-102012 018 517
- US-A- 1 370 885
- US-A- 5 836 674

## Beschreibung

Die Erfindung betrifft eine optische Struktur für eine Beleuchtungsvorrichtung eines Kraftfahrzeugscheinwerfer, welche Beleuchtungsvorrichtung zur Abstrahlung von Licht eingerichtet ist, welches von der Beleuchtungsvorrichtung abgestrahlte Licht eine vorgegebene Lichtverteilung bildet.

Weiters betrifft die Erfindung eine Beleuchtungsvorrichtung für einen Fahrzeugscheinwerfer mit einer solchen optischen Struktur.

Außerdem betrifft die Erfindung einen Fahrzeugscheinwerfer mit zumindest einer solchen Beleuchtungsvorrichtung.

Nach den gesetzlichen Bestimmungen haben Lichtverteilungen von Fahrzeugscheinwerfern eine Reihe von Voraussetzungen zu erfüllen.

Zum Beispiel sind nach ECE und SAE oberhalb der Hell-Dunkellinie (HD-Linie) - also außerhalb des primär beleuchteten Bereichs - in bestimmten Regionen minimale und maximale Lichtstärken erforderlich. Diese fungieren als "Signlight" und ermöglichen das Ausleuchten von Überkopf-Wegweisern bei Anstrahlung durch vorbeifahrende Fahrzeuge. Die verwendeten Lichtstärken liegen üblicherweise über den üblichen Streulichtwerten aber bei weitem unter den Lichtstärken unterhalb der HD-Linie. Die geforderten Lichtwerte müssen mit möglichst geringer Blendwirkung erzielt werden.

"Signlight" wird üblicherweise durch spezielle Facetten in der Projektionslinse (Größe zumindest einige Millimeter) oder durch diskrete, kleine Erhebungen realisiert. Nachteilig daran ist insbesondere, dass diese Strukturen von außen als helle Lichtpunkte wahrnehmbar sind und damit vor allem aus Designgründen zunehmend abgelehnt werden. Außerdem sind derartige Vorrichtungen auf das dahinterliegende optische System abgestimmt - werden daran Änderungen vorgenommen, ist die angestrebte Funktion nicht mehr sichergestellt.

Weiters sind aus gesetzlichen Gründen definiert unscharfe Hell-Dunkel-Grenzen notwendig, sodass HD-Linien weder zu scharf noch zu verwaschen abgebildet werden, d.h. die maximale Schärfe der HD-Linie ist gesetzlich definiert. Eine solche Verwischung der HD-Linie führt dazu, dass die HD-Linie vom Fahrer als "weicher" und subjektiv angenehmer empfunden wird.

Die Quantifizierung dieses HD-Übergangs erfolgt durch das Maximum eines Gradienten entlang eines vertikalen Schnitts durch die Helldunkelgrenze. Dazu wird der Logarithmus der Beleuchtungsstärke an Messpunkten in 0,1°-Abständen errechnet und deren Differenz gebildet, wodurch man die Gradientenfunktion erhält. Das Maximum dieser Funktion wird als Gradient der HD-Grenze bezeichnet. Da diese Definition die menschliche Helligkeitswahrnehmung nur ungenau nachbildet, können unterschiedlich wahrgenommene HD-Linien denselben gemessenen Gradientenwert aufweisen bzw. bei ähnlich aussehenden HD-Linien können unterschiedliche Gradienten gemessen werden.

Gradientenaufweichung erfolgt üblicherweise durch die Veränderung der Linsenoberfläche. einer Linse einer Beleuchtungsvorrichtung. Gemäß dem Stand der Technik sind verschiedene Lösungen gebräuchlich: Durch statistisches Aufrauhen der Linsenoberfläche kann beispielsweise eine weichere HD-Grenze erreicht werden, allerdings kommt es dadurch zur Blendung entgegenkommender Verkehrsteilnehmer. In anderen Varianten wird eine Modulation (z.B. Überlagerung von zwei Sinuswellen, kleine Vertiefungen in Form von Kugelabschnitten, etc.) auf die Linsenoberfläche aufgebracht. Derartige Lösungen sind stark von der Lichtstromverteilung durch die Linse abhängig, diesbezügliche Änderungen, beispielsweise durch Variation der Lichttechnik, wirken sich dann stark und teilweise negativ auf die erzeugte Lichtstromverteilung aus. Die Patentveröffentlichung DE102008023551 A1 offenbart eine optische Linse mit optischen Strukturelementen, um die Helldunkelgrenze zu beeinflussen. Ein anderes Thema bildet die Erzeugung von segmentierten Lichtverteilungen. Solche kommen beispielsweise bei der Erzeugung von dynamischen Lichtverteilungen, etwa einer dynamischen Fernlichtverteilung, zum Einsatz. Bei speziellen Ausführungsformen wird eine solche dynamische Lichtverteilung aus einer Anzahl an Einzellichtverteilungen aufgebaut. Dazu wird beispielsweise mit einzelnen Lichtquellen, welchen jeweils eine Vorsatzoptik zugeordnet ist, jeweils ein kleines Segment im Lichtbild erzeugt, die Überlagerung dieser Lichtsegmente ergibt dann die gesamte Lichtverteilung. Durch Abschalten einzelner Lichtquellen können dabei einzelne Segmente im Lichtbild abgeschaltet, also nicht beleuchtet werden. Die Segmente sind dabei üblicherweise in Zeilen und Spalten angeordnet.

Grundsätzlich besteht die Möglichkeit, die einzelnen Lichtsegmente mit scharfen Begrenzungskanten abzubilden und Maßnahmen zu treffen, dass benachbarte Lichtsegmente unmittelbar aneinander grenzen. Dies hat den Vorteil, dass im "Volllicht"-Betrieb, d.h. bei Aktivierung aller Lichtsegmente keine dunklen Bereiche ("Gitter") zwischen den Lichtsegmenten zu erkennen sind. Der Nachteil liegt allerdings darin, dass bei einem Abschalten von einem oder mehreren Lichtsegmenten die Lichtverteilung in diesen Bereichen eine scharfe Hell-Dunkel-Grenze aufweist, was als unangenehm empfunden wird und zusätzlich zu einer raschen Ermüdung führt.

Ein anderer Ansatz besteht darin, die Lichtsegmente nicht unmittelbar aneinander angrenzen zu lassen. Als problematisch bei solchen Lichtverteilungen hat sich herausgestellt, dass es dabei naturgemäß zu unerwünschten Lichteffekten im Bereich der aneinander angrenzenden Segmente kommt, insbesondere kommt es dabei zu Helligkeitsschwankungen in diesem Bereich, die sich in einer sichtbaren Gitterstruktur äußern, die von einem Fahrzeuglenker als unangenehm empfunden werden kann.

Außerdem besteht auch in diesem Fall in der Regel noch immer das Problem der scharfen Hell-Dunkel-Grenze.

Die beschriebenen Nachteile des Stands der Technik sollen ausgeräumt werden. Es ist daher eine Aufgabe der Erfindung, ein refraktives optisches Bauteil bereit zu stellen, mit dem ein Lichtbild realisiert werden kann, das die Gesetzeswerte erfüllt und gleichzeitig nicht als störend empfunden wird.

Diese Aufgabe wird mit einer eingangs erwähnten optischen Struktur erfindungsgemäß dadurch gelöst, dass die optische Struktur der Beleuchtungsvorrichtung derart zugeordnet oder derart Teil der Beleuchtungsvorrichtung ist, dass die optische Struktur von im Wesentlichen dem gesamten Lichtstrom der Beleuchtungsvorrichtung durchstrahlt wird, und wobei die optische Struktur aus einer Vielzahl von optischen Strukturelementen besteht, welche Strukturelemente eine Licht streuende Wirkung aufweisen, und welche optische Strukturelemente derart ausgebildet sind, die - von der Beleuchtungsvorrichtung erzeugte, unmodifizierte Lichtverteilung - von der optischen Struktur zu einer vorgebbaren, modifizierten Lichtverteilung modifiziert ist, und wobei die optischen Strukturelemente eine viereckige Grundfläche aufweisen, d.h., dass die Fläche zwischen den Eckpunkten eines viereckigen Gitters vollständig von der Grundfläche von genau einem optischen Strukturelement bedeckt ist.

Die viereckige Grundfläche der optischen Strukturelemente ist dabei von geraden Seiten begrenzt, d.h. zwei benachbarte Eckpunkte der Grundfläche eines optischen Strukturelementes sind jeweils mit einer geraden Seite verbunden. Diese Aussage bezieht sich dabei allerdings auf ein "ebenes" Gitter, wie im Folgenden kurz erläutert:
Üblicherweise kann man davon ausgehen, dass die optische Struktur auf einer optischen Grundstruktur aufgebracht wird, d.h. man geht von einer unmodifizierten Fläche aus, beispielsweise einer glatten, ebenen Abdeckscheibe oder einer Linsenfläche, beispielsweise der ebenen Lichteintrittsfläche oder auch der gekrümmten Lichtaustrittsfläche aus. Bei einer ebenen Grundstruktur ist das Gitter ein ebenes, zweidimensionales Gitter, in welchem die Strukturelemente mit ihren ebenen, viereckigen Grundflächen angeordnet sind.

Bei einer gekrümmten Fläche wird zur Berechnung der Strukturelemente und zu ihrer Anordnung von einer ebenen Fläche ausgegangen, also von einem ebenen Gitter und Strukturelementen mit einer ebenen viereckigen Grundfläche mit geraden Seiten. Dieses ebene Gitter wird dann auf die gekrümmte Fläche der Grundstruktur projiziert, sodass das "tatsächliche" Gitter in diesem Fall nicht mehr eben ist und auf der gekrümmten Grundstruktur die Grundflächen der Strukturelemente ebenfalls nicht mehr eben sondern gekrümmt sind, die die Grundfläche begrenzenden vier Seiten sind ebenfalls gekrümmt.

In der Praxis ist dies Unterscheidung von geringer Bedeutung, da die optischen Strukturelemente so klein sind, dass im Bereich eines Strukturelementes die gekrümmte Fläche als eben angenommen werden kann.

Wenn somit im Zusammenhang mit einer gekrümmten Grundstruktur von einem Viereck, etc. mit geraden Seiten die Rede ist, ist damit die Projektion dieser gekrümmten Fläche in eine Ebene zu verstehen.

Über die oben beschriebene "ebene" Fläche wird somit ein zweidimensionales Gitter aufgespannt, wobei jeweils 4 Gitterpunkte eine Gitterzelle bilden. Eine solche Gitterzelle wird von einem optischen Strukturelement besetzt. Die "Grundfläche" entspricht dabei der Fläche der ebenen Gitterzelle, das optische Strukturelement selbst weist diese viereckige Grundfläche auf, die eigentliche Oberfläche des Strukturelementes weist einen positiven oder negativen Abstand (oder u.U. auch in Bereichen einen Abstand Null) zu dieser Grundfläche auf.

Wesen der Erfindung ist es, dass dadurch, dass das Gitter viereckig ist und die Grundfläche des Strukturelementes die gesamte Fläche einer Gitterzelle einnimmt, die gesamte Oberfläche der "Grundstruktur" für die Modifikation der Lichtverteilung herangezogen werden kann. Bei einem hexagonalen Gitter mit kreisförmigen Strukturelementen, wo ebenfalls bereits eine sehr hohe Flächenfüllung von ca. 90 % mit den Strukturelementen erreicht wird, bleibt trotzdem ein geringer Anteil der Grundfläche von ca. 10 % unmodifiziert und trägt nicht zur Modifikation des Lichtbildes bei.

In einer parallelen Patentanmeldung der Anmelderin ist eine eingangs erwähnte optische Struktur beschrieben, welche aus optischen Strukturelementen gebildet ist, welche eine kreisförmige Basis aufweisen und in einem hexagonalen Gitter angeordnet sind. Bei einer solchen hexagonalen Anordnung können auf der gekrümmten Grenzfläche einer Linse ca. 91% dieser Fläche mit Strukturelementen bedeckt werden, ca. 9% der Linsenoberfläche bleiben unbedeckt. Bei der Abbildung von scharf begrenzten Lichtsegmenten mit einer solchen Linse, z.B. bei rechteckigen Lichtsegmenten, führen diese unbedeckten Bereiche der Linsenoberfläche zu scharfen Abbildung der Kanten der Lichtsegmente und damit zu Inhomogenitäten im Lichtbild.

Mit der vorliegenden Anordnung, bei welche die Linsenoberfläche zu 100% mit den Strukturelementen bedeckt ist, kann auch mit scharf begrenzten Lichtsegmenten, welche mit der Linse in einen Bereich vor dem Fahrzeug abgebildet werden, ein homogenes Lichtbild erzeugt werden.

Durch die viereckige Form der Basisfläche der Strukturelemente, welche von der Symmetrie her vorzugsweise der Symmetrie der Lichtsegmente entsprechen, können außerdem die Eckbereiche zwischen vier Lichtsegmenten optimal ausgeleuchtet werden, was mit Strukturelementen mit kreisförmiger Basis nicht möglich ist.

Bei einer bevorzugten Ausführungsform der Erfindung ist dabei vorgesehen, dass die modifizierte Lichtverteilung durch Faltung der unmodifizierten Lichtverteilung mit einer Streufunktion gebildet ist, und wobei die optische Struktur derart ausgebildet ist, dass die unmodifizierte Lichtverteilung entsprechend der Streufunktion modifiziert ist.

Gemäß der Erfindung wird somit die gesamte optische Struktur betrachtet, und diese wird entsprechend über eine Streufunktion derart modifiziert bzw. geformt, dass sich das vollständige gewünschte Lichtbild ergibt. Anders als im Stand der Technik, wo beispielsweise zur Erzeugung der Gradientenaufweichung und von Signlight unterschiedliche Strukturelemente auf einer optischen Struktur herangezogen werden oder manche der bestehende Strukturelemente zusätzlich noch modifiziert werden, wird entsprechend der vorliegenden Erfindung die gewünschte (modifizierte) Lichtverteilung, ausgehend von einer unmodifizierten, mit der Beleuchtungsvorrichtung ohne optische Struktur erzeugten Lichtverteilung, dadurch realisiert, dass die unmodifizierte Lichtverteilung mit einer solchen Streufunktion gefaltet ist, dass sich die gewünschte Lichtverteilung ergibt, und die optische Struktur in ihrer Gesamtheit wird dann derart geformt, dass sie den gesamten Lichtstrom der Beleuchtungsvorrichtung derart modifiziert, dass sich aus der unmodifizierten Lichtverteilung eine der Streufunktion entsprechend modifizierte Lichtverteilung ergibt.

Vorzugsweise ist dabei vorgesehen, dass die Strukturelemente über zumindest eine, vorzugsweise genau eine definierte Fläche zumindest eines, vorzugsweise genau eines Optikelementes verteilt sind.

Von besonderem Vorteil ist es, wenn die optischen Strukturelemente derart ausgebildet sind, dass jedes Strukturelement das durch das Strukturelement durchtretende Lichtbündel entsprechend der Streufunktion zu einem modifizierten Lichtbündel modifiziert.

Betrachtet man ein bestimmtes (unmodifiziertes) Lichtbündel aus dem gesamten Lichtstrom, so bildet dieses einen gewissen Beitrag zu der Lichtverteilung im Lichtbild (der gesamte Lichtstrom erzeugt die (Gesamt)-Lichtverteilung). Ein Strukturelement modifiziert nun ein durch das Strukturelement durchtretende Lichtbündel derart, dass der unmodifizierte Beitrag zu der Gesamtlichtverteilung entsprechend der Streufunktion verändert wird. Beispielsweise erzeugt das unmodifizierte Lichtbündel einen Lichtverteilungsbeitrag mit einer bestimmten Form, d.h. es werden bestimmte Bereiche auf der Fahrbahn oder auf einem Messschirm beleuchtet, andere Bereiche sind unbeleuchtet. Durch das Strukturelement werden nun entsprechend der Streufunktion auch Bereiche außerhalb des ursprünglich beleuchteten Bereiches mit einer bestimmten Intensität beleuchtet, während - nachdem der Gesamtlichtstrom konstant bleibt - die Intensität zumindest in Teilen des mit dem unmodifizierten Lichtbündel ursprünglich beleuchteten Bereiches reduziert ist.

Entsprechend der Symmetrie von mit der optischen Struktur zu modifizierenden Lichtsegmenten ist bei einer Ausführungsform der Erfindung vorgesehen, dass die Grundfläche jedes optischen Strukturelementes jeweils von einem Rechteck gebildet ist.

Es kann prinzipiell entsprechend dem Einsatzfall auch möglich sein, dass sowohl rechteckige als auch quadratische optische Strukturelemente gemeinsam verwendet werden, bevorzugt weisen aber alle optischen Strukturelemente identische Grundflächen, sowohl hinsichtlich Form als bevorzugt auch hinsichtlich der Abmessungen auf.

Ebenso kann vorgesehen sein, dass die Grundfläche jedes optischen Strukturelementes jeweils von einem Quadrat gebildet ist.

Die optischen Strukturelemente sind also in einem rechteckigen, vorzugsweise quadratischen Gitter angeordnet, wobei jeweils ein Strukturelement die gesamte Fläche zwischen vier Eckpunkten, die von den Gitterpunkten gebildet sind, besetzt.

Mit rechteckigen, insbesondere quadratischen Strukturelementen kann eine rechteckige bzw. quadratische Streufunktion realisiert werden, mittels welcher insbesondere die "Kreuzungsbereiche" von vier benachbarten Lichtsegmenten optimal ausgeleuchtet werden können, um die Homogenität des Lichtbildes zu erhöhen.

Bei einer konkreten, bevorzugten Ausführungsform der Erfindung ist vorgesehen, dass die optischen Strukturelemente in ihrem Zentrum eine Zentralerhebung mit vorzugsweise kreisförmiger oder elliptischer Basis aufweisen.

Die Kreisform der Basis bezieht sich dabei wiederum auf die Projektion der definierten Fläche, auf welcher die optischen Strukturelemente angeordnet sind, in eine Ebene.

Vorzugsweise, um eine vollständige Bedeckung der definierten Fläche erreichen zu können, ist vorgesehen, dass sich die Basis der Zentralerhebung bis zu den vier Begrenzungsseiten der viereckigen Grundfläche erstreckt.

Unter anderem für die Fertigung von Vorteil ist es, wenn die Zentralerhebung einen über ihre gesamte Oberfläche stetigen Verlauf aufweist. Außerdem können die Streueigenschaften auf diese Weise besser eingestellt werden.

Bei einer gewünschten symmetrischen Streufunktion ist vorgesehen, dass die Zentralerhebung ihren maximalen Abstand zu der Grundfläche im geometrischen Mittelpunkt ihrer Grundfläche aufweist.

Weiters ist mit Vorteil vorgesehen, dass die Zentralerhebung ihren minimalen Abstand zu der Grundfläche an ihrem Kreisumfang aufweist.

Insbesondere ist dabei vorgesehen, dass der minimale Abstand des Kreisumfanges zu der Grundfläche gleich Null ist.

Weiters ist bei einer konkreten, insbesondere bei der oben beschriebenen konkreten Ausführungsform noch vorgesehen, dass die Strukturelemente in ihren Eckbereichen eine Eckbereichs-Erhebung aufweisen, welche jeweils durch eine Seitenfläche einer pyramidenartigen Erhebungen gebildet.

Durch die pyramidenartigen Erhebungen wird es möglich, eine an und für sich kreisrunde Mikrostruktur, also eine Mikrostruktur (optisches Strukturelement) mit kreisrunder Basis in ein rechteckiges, insbesondere quadratisches Gitter einzubauen", und so 100% Bedeckungsgrad der definierten Fläche, auf welcher die optische Struktur angeordnet ist, zu erreichen.

Mit Vorteil ist vorgesehen, dass alle an einem Eckpunkt des Gitters liegenden Strukturelemente zu der pyramidenartigen Erhebung beitragen.

Die vier Seitenflächen der an einem Gitterpunkt liegenden Strukturelemente bilden somit gemeinsam die pyramidenartige Erhebung. Diese pyramidenartige Erhebung ist durch vier, vorzugsweise symmetrisch um den Gitterpunkt angeordnete Eckpunkte begrenzt. Diese Eckpunkte liegen jeweils auf einer Begrenzungsseite eines an der der Erhebung beteiligten Strukturelementes, wobei die Eckpunkte vorzugsweise genau in der Hälfte dieser Begrenzungsseiten liegen.

Benachbarte Eckpunkte der pyramidenartigen Erhebung sind durch gekrümmte, insbesondere nach innen gekrümmte bzw. nach innen gebogene Begrenzungsseiten miteinander verbunden.

Hinsichtlich der Symmetrie ist es insbesondere von Vorteil, wenn die Spitze einer pyramidenartigen Erhebung exakt über einem Gitterpunkt des Gitters liegt.

Weiters ist mit Vorteil vorgesehen, dass die optischen Strukturelemente jeweils in Bezug auf ihre Diagonale symmetrisch, insbesondere spiegelsymmetrisch ausgebildet sind.

Bei einer konkreten Ausführungsform der Erfindung ist vorgesehen, dass in einem Schnitt durch eine pyramidenartige Erhebung entlang einer Ebene normal auf die Grundfläche entlang einer Diagonalen die Eckbereichs-Erhebungen einen im Wesentlichen linearen Anstieg aufweisen.

Außerdem kann vorgesehen sein, dass in einem Schnitt durch eine pyramidenartige Erhebung entlang einer Ebene normale auf die Grundfläche entlang einer Begrenzungsseite die Eckbereichs-Erhebungen einen im Wesentlichen konkaven Verlauf aufweisen.

Schließlich ist mit Vorteil noch vorgesehen, dass die Zentralerhebung und die Eckbereichs-Erhebungen stetig ineinander über gehen.

Auf diese Weise lassen sich die optische Strukturen wesentlich einfacher herstellen, da stetige Flächen wesentlich leichter abformbar sind, etwa in einem Spritzgussprozess, als nicht stetige Oberflächen.

Generell gilt, dass mit der kreisförmigen Struktur jedes einzelne Lichtsegment insbesondere im Bereich seiner scharfen Begrenzungskanten etwas verwischt wird. Dadurch, dass die gesamte Grundfläche von optischen Strukturelementen eingenommen wird in Folge der 100% Flächenfüllung, werden die Begrenzungskanten nicht mehr absolut scharf abgebildet. Mit den pyramidenartigen Erhebungen kann zusätzlich der Bereich zwischen vier benachbarten Lichtsegmenten optimal ausgeleuchtet werden, sodass sich in allen Bereichen zwischen den Lichtsegmenten einen homogene Lichtverteilung ergibt, bei Abschalten eines (oder mehrerer) Lichtsegmente(s) der ausgeblendete Bereich zwar ausreichend scharf, aber mit verwaschener Begrenzungsseite abgebildet wird, sodass diese nicht als störend empfunden wird.

Bei einer Ausführungsform der Erfindung ist vorgesehen, dass die optische Struktur auf zumindest einer, vorzugsweise genau einer Grenzfläche eines Optikelementes, welches in Form einer Streuscheibe oder in Form einer Abdeckscheibe der Beleuchtungsvorrichtung ausgebildet ist, angeordnet ist.

Die eingangs erwähnte "definierte Fläche" liegt somit auf dieser zumindest einen, vorzugsweise genau einen Grenzfläche eines Optikelementes, welches als Streuscheibe oder Abdeckscheibe ausgebildet ist.

Bei einer anderen Ausführungsform ist die optische Struktur auf zumindest einer Oberfläche eines Optikelementes in Form einer Linse, insbesondere einer Projektionslinse der Beleuchtungsvorrichtung angeordnet ist.

Die "definierte Fläche" liegt somit auf einer Oberfläche einer Linse.

Vorzugsweise ist dabei die optische Struktur auf der Lichtaustrittsseite der Linse angeordnet ist.

Die optische Struktur ist somit vorzugsweise auf der gekrümmt ausgebildeten Lichtaustrittsfläche der Linse, vorzugsweise der Projektionslinse, angeordnet.

Von besonderem Vorteil ist es, wenn die Strukturelemente der optischen Struktur über die gesamte zumindest eine Oberfläche eines Optikelementes verteilt sind.

Die "definierte Fläche" ist somit durch die gesamte Oberfläche bzw. Grenzfläche des Optikelementes gebildet.

Weiters ist es von besonderem Vorteil, wenn alle Strukturelemente im Wesentlichen identisch ausgebildet sind.

Jedes Strukturelement modifiziert den durch sie durchtretenden Lichtstrom auf identische Weise wie alle anderen Strukturelemente.

"Im Wesentlichen" identisch bedeutet dabei, dass bei einer ebenen Fläche, auf welcher die Strukturelemente angeordnet sind, diese tatsächlich identisch ausgebildet sind.

Bei gekrümmten Flächen sind die Strukturelemente im zentralen Bereich identisch ausgebildet, während sich durch die Krümmung der Fläche die Randbereiche unterschiedlicher Strukturelemente (geringfügig) voneinander unterscheiden können.

Bei einer konkreten Ausführungsform ist entsprechend vorgesehen, alle Strukturelemente in Bezug auf eine ebene bzw. als eben gedachte Fläche identisch ausgebildet sind.

Entsprechend werden die Strukturelemente für eine ebene Fläche berechnet; werden diese so berechneten, identischen Strukturelemente - mit identischer Ausrichtung - auf eine gekrümmte Fläche beispielsweise einer Linse aufgesetzt, so sind wie oben schon erwähnt die Strukturelemente in ihrem zentralen Bereich nach wie vor identisch ausgebildet; in den Übergangsbereichen zu der ursprünglichen Linsenfläche, auf welche die Strukturelemente aufgesetzt sind, weisen die Strukturelemente aber ja nach Position auf der Linsenfläche auf Grund der Krümmung der Linsenoberfläche eine unterschiedliche Gestalt auf, was aber bei der geringen Größe der Strukturelemente in keinen oder nur sehr geringen Auswirkungen auf die Lichtverteilung resultiert.

Weiters ist es von Vorteil, wenn alle Strukturelemente identisch ausgerichtet sind.

Bei einer ebenen definierten Fläche bedarf dies keiner weiteren Erläuterungen. Bei gekrümmten Flächen (Beispiel: Linse) sind die Strukturelemente identisch entlang von Achsen durch die Fläche angeordnet, welche Achsen alle parallel zu einer Symmetrieachse oder zu einer optischen Achse der Fläche verlaufen (und nicht normal auf die Flächennormale).

Dies hat insbesondere fertigungstechnische Vorteile, da die optische Struktur und das Werkzeug zur Erzeugung der Struktur auf diese Weise einfach entfernt werden können, da sich keine Hinterschneidungen an der optischen Struktur bilden können.

Optimal lässt sich eine erfindungsgemäße optische Struktur erzeugen, wenn die Streufunktion (PSF) eine Point-Spread-Function ist.

Weiters gilt auch mit Vorteil, dass die Symmetrie eines Strukturelementes von der Symmetrie der Streufunktion PSF ab hängt. Das Strukturelement weist i.A. dieselbe Symmetrieklasse wie die PSF auf. Ist beispielsweise die PSF horizontal spiegelsymmetrisch, so weist auch das Strukturelement eine horizontale Spiegelsymmetrie auf.

Weiters ist mit Vorteil vorgesehen, dass die Abmessung eines Strukturelementes, beispielsweise ein Durchmesser und/oder eine Höhe des Strukturelementes, größer, insbesondere sehr viel größer als die Wellenlänge von sichtbarem Licht ist, sodass Beugungseffekte vermieden werden können.

Insbesondere ist dabei mit Vorteil vorgesehen, dass die Höhe der Strukturelemente im µm-Bereich liegt.

Beispielsweise liegt die Höhe der Strukturelemente im Bereich von 0,5 - 5 µm, wobei vorzugsweise die Höhe der Strukturelemente im Bereich von 1-3 µm liegt.

Bei einer konkreten Ausführungsform beträgt die Höhe der Strukturelemente ca. 2,7 µm.

Weiters ist bei einer konkreten Ausführungsform, z.B. bei Varianten mit den oben beschriebenen Höhen, vorgesehen. dass der Durchmesser bzw. eine Länge der Strukturelemente im Millimeter-Bereich liegt.

Beispielsweise liegt der Durchmesser bzw. eine Länge der Strukturelemente zwischen 0,5 - 2 mm, wobei vorzugsweise der Durchmesser bzw. eine Länge der Strukturelemente ca. 1 mm beträgt.

Bei einer beispielhaften Ausführungsform einer Linse, auf welcher die Strukturelemente angeordnet sind, beträgt der Durchmesser der Linse 90 mm.

In der Herstellung einfach ist eine optische Struktur, wenn die definierte Fläche, auf welcher die Strukturelemente verteilt sind, in eine - gedachte -, vorzugsweise regelmäßige Gitterstruktur unterteilt ist, und wobei die Strukturelemente an den Gitterpunkten oder zwischen den Gitterpunkten der Gitterstruktur angeordnet sind.

Eine solche Anordnung ist insbesondere auch in Hinblick auf eine optimale optische Wirkung der optischen Struktur von Vorteil, da dadurch die optische Auswirkung der optischen Struktur optimal eingestellt werden kann.

Die "Regelmäßigkeit" der Struktur ist dabei bei einer gekrümmten optischen Fläche, auf welcher die optische Struktur angeordnet ist, in Bezug auf eine Projektion dieser definierten Fläche in eine Ebene zu sehen, wobei - auf Grund der geringen Gitterabstände - das Gitter auch bei einer gekrümmten definierten Flächen im Bereich von benachbarten Gitterpunkten als eben betrachtet werden kann.

Vorzugsweise ist vorgesehen, dass an jedem Gitterpunkt oder zwischen den Gitterpunkten der Gitterstruktur jeweils genau ein Strukturelement angeordnet ist.

Außerdem kann vorgesehen sein, dass benachbarte Strukturelemente ineinander übergehend, d.h. einander berührend angeordnet sind oder die Strukturelemente voneinander isoliert, d.h. einander nicht berührend angeordnet sind.

Bei einer konkreten Ausführungsform der Erfindung ist vorgesehen, dass benachbarte Gitterpunkte einen Abstand von ca. 0,5 - 2mm, vorzugsweise von ca. 1 mm zueinander aufweisen.

In optischer Hinsicht optimal ist es, wenn der Übergang der Strukturelemente zu der definierten Fläche stetig, vorzugsweise C2-stetig, d.h. mit stetigen Tangenten erfolgt.

Besonders gut geeignet ist eine oben beschriebene optische Struktur für eine Beleuchtungsvorrichtung, welche dazu eingerichtet ist, das von ihr abgestrahlte Licht in Form einer abgeblendeten Lichtverteilung, insbesondere einer Abblendlichtverteilung, abzubilden, wobei die abgeblendete Lichtverteilung, insbesondere die Abblendlichtverteilung eine Hell-Dunkel-Grenze aufweist, wobei erfindungsgemäß die optische Struktur, insbesondere die Strukturelemente derart ausgebildet ist/sind bzw. die Streufunktion derart ausgestaltet ist, dass der Gradient der Hell-Dunkel-Grenze der - unmodifizierten - Lichtverteilung der Beleuchtungsvorrichtung reduziert ist.

Die "Weichheit" des Übergangs wird, wie dies in der DE 10 2008 023 551 A1 im Detail beschrieben und hier auszugsweise wiederholt wird, durch das Maximum des Gradienten entlang eines vertikalen Schnittes durch die Helldunkelgrenze bei -2,5° horizontal beschrieben. Dazu wird der Logarithmus der Beleuchtungsstärke an 0,1° vertikal voneinander entfernt liegenden Messpunkten errechnet und deren Differenz gebildet, wodurch man die sogenannte Gradientenfunktion erhält. Das Maximum der Gradientenfunktion wird als Gradient der Helldunkelgrenze bezeichnet. Je größer dieser Gradient ist, desto schärfer ist der Helldunkel-Übergang. Die vertikale Position des Maximums dieser Funktion beschreibt auch den Ort, an dem die sogenannte Helldunkelgrenze erkannt wird, das heißt die Stelle, die das menschliche Auge als Grenzelinie zwischen "hell" und "dunkel" wahrnimmt (etwa bei -0,5° vertikal).

Eine Beleuchtungsvorrichtung erzeugt - ohne erfindungsgemäße optische Struktur - eine Abblendlichtverteilung mit einer Hell-Dunkel-Grenze mit einer gewissen Schärfe, beschrieben durch den sogenannten "Gradienten". Durch Vorsehen einer erfindungsgemäßen optischen Struktur wird diese - unmodifizierte - Lichtverteilung derart modifiziert, dass die Schärfe der Hell-Dunkel-Grenze verringert wird, sodass sie den gesetzlichen Anforderungen entspricht und vom menschlichen Auge als angenehm wahrgenommen wird.

Ebenso ist eine erfindungsgemäße optische Struktur von Vorteil für eine Beleuchtungsvorrichtung, welche Beleuchtungsvorrichtung dazu eingerichtet ist, das von ihr abgestrahlte Licht in Form einer abgeblendeten Lichtverteilung, insbesondere einer Abblendlichtverteilung, abzubilden, wobei die abgeblendete Lichtverteilung, insbesondere die Abblendlichtverteilung eine Hell-Dunkel-Grenze aufweist, wobei erfindungsgemäß die optische Struktur, insbesondere die Strukturelemente derart ausgebildet ist/sind bzw. die Streufunktion derart ausgestaltet ist, dass ein Anteil des Lichtstroms der Beleuchtungsvorrichtung in einen Bereich oberhalb der Hell-Dunkel-Grenze abgebildet wird.

Auf diese Weise kann mit der erfindungsgemäßen optischen Struktur auf optimale Weise ein eingangs beschriebenes Signlight erzeugt werden, in dem beispielsweise jedes optische Strukturelement einen geringen Anteil des durch das Strukturelement durchtretenden Lichtstromes in einen entsprechenden Bereich ablenkt.

Insbesondere ist es von Vorteil, dass mit einer erfindungsgemäßen optischen Struktur sowohl der Gradient der Hell-Dunkel-Grenze eingestellt als auch ein Signlight erzeugt werden kann. Im Stand der Technik sind dazu zwei optische Strukturen notwendig, wobei einer ersten Struktur zum Erzeugen einer der beiden optischen "Effekte" eine zweite Struktur überlagert wird, welche den zweiten optischen "Effekt" erzeugt. Bei der erfindungsgemäßen optischen Struktur wird dies durch eine Struktur bestehend aus im Wesentlichen identischen Strukturelementen erreicht, welche zur "Realisierung" einer Streufunktion wie oben beschrieben ausgebildet sind.

Bei einer konkreten Ausführungsform ist dabei vorgesehen, dass der von der optischen Struktur abgelenkte Lichtstrom in einem Bereich zwischen 1,5° und 4°, insbesondere zwischen 2° und 4° über der HH-Linie liegt.

Bei einer beispielhaften Ausführungsform der Erfindung ist vorgesehen, dass von der optischen Struktur 0,5% - 1% des Lichtstroms der Beleuchtungsvorrichtung in einen Bereich oberhalb der Hell-Dunkel-Grenze abgelenkt wird.

Eine erfindungsgemäße optische Struktur ist weiters von Vorteil für eine Beleuchtungsvorrichtung, welche Beleuchtungsvorrichtung dazu eingerichtet ist, das von ihr abgestrahlte Licht in Form von in n Zeilen und m Spalten abgebildeten Einzellicht-Verteilungen abzubilden, wobei n > 1, m ≥ 1 oder n ≥ 1, m > 1 gilt, und welche Einzellicht-Verteilungen gemeinsam eine Gesamtlichtverteilung, beispielsweise eine Fernlichtverteilung bilden, wobei erfindungsgemäß vorgesehen ist, dass die optische Struktur, insbesondere die Strukturelemente derart ausgebildet ist/ sind bzw. die Streufunktion derart ausgestaltet ist, dass zumindest ein Teil des Lichtstroms der Beleuchtungsvorrichtung in die Grenzbereiche, in welchen jeweils zwei Einzellicht-Verteilungen aneinandergrenzen, abgelenkt wird.

Der "Aufbau" einer Gesamtlichtverteilung aus Einzel-Lichtverteilungen hat den Vorteil, dass z.B. wie oben beschrieben durch Ausblenden einzelner Lichtsegmente (Einzellichtverteilungen) bestimmte Bereiche ausgeblendet werden können. Dazu ist es von Vorteil, wenn die Einzellichtverteilungen vergleichsweise scharfe angegrenzt sind, was allerdings den Nachteil mit sich bringt, dass sich eine optische Gitterstruktur bilden kann, mit dunklen oder abgedunkelten Bereichen zwischen den Lichtsegmenten, welche als optisch unangenehm empfunden werden können und u.U. gesetzlich auch nicht zulässig sind.

Mit der Erfindung ist es auf einfache Weise möglich, ausreichend Licht in diese dunklen oder abgedunkelten Bereiche zwischen den Lichtsegmenten abzustrahlen, sodass diese Gitterstruktur nicht mehr sichtbar ist.

Insbesondere ist dies von Vorteil, wenn benachbarte Einzellicht-Verteilungen der unmodifizierten Lichtverteilung einen definierten Abstand bzw. definierte Abstände zueinander aufweisen.

Bei einer konkreten Ausführungsform ist dabei vorgesehen, dass die Einzellicht-Verteilungen der unmodifizierten Lichtverteilung, insbesondere bei einer Projektion auf eine vertikale Ebene, eine rechtseckige oder quadratische Form aufweisen.

Insbesondere ist dabei vorgesehen, dass alle Abstände zwischen benachbarten Einzellicht-Verteilungen in horizontaler Richtung identisch sind.

Weiters kann alternativ oder vorzugsweise zusätzlich noch vorgesehen sein, dass alle Abstände zwischen benachbarten Einzellicht-Verteilungen in vertikaler Richtung identisch sind.

Bei einer konkreten Ausführungsform ist vorgesehen dass die Einzellicht-Verteilungen eine Breite und/oder eine Höhe von ca. 1° aufweisen.

Typischerweise ist der Abstand zwischen zwei benachbarten Einzellicht-Verteilungen kleiner gleich 0,5° und größer 0°.

Beispielsweise ist der Abstand zwischen zwei benachbarten Einzellicht-Verteilungen kleiner gleich 0,2°.

Zum Beispiel liegt der Abstand zwischen zwei benachbarten Einzellicht-Verteilungen zwischen 0,05° und 0,15°.

Weiters kann auch vorgesehen sein, dass der Abstand zwischen zwei benachbarten Einzellicht-Verteilungen kleiner gleich 0,1° ist.

Bei einer konkreten Ausführungsform entspricht die durchschnittliche Lichtintensität in einem Spalt zwischen zwei Einzelllicht-Verteilungen, erzeugt mit dem Lichtstrom, der für eine Einzellicht-Verteilung bestimmt ist, der halben durchschnittlichen Lichtintensität in einer angrenzenden Einzellicht-Verteilung der modifizierten Lichtverteilung, sodass die Gesamt-Lichtintensität, die mit Licht, welches für die beiden angrenzenden Einzellicht-Verteilungen bestimmt ist, im Wesentlichen der Lichtintensität der Einzellicht-Verteilungen der modifizierten Lichtverteilung entspricht.

Vorzugsweise ist die Lichtintensität in allen Einzellicht-Verteilungen dabei im Wesentlichen identisch, ebenso ist vorteilhafterweise die Intensität in den Einzellicht-Verteilungen im Wesentlichen homogen über die gesamte Fläche der Einzellicht-Verteilung.

Wie oben schon erwähnt ist es von besonderem Vorteil, wenn durch die optische Struktur ein Teil jenes Lichtstroms, welcher ohne optische Struktur ausschließlich eine Einzellicht-Verteilung erzeugt, in die diese Einzellicht-Verteilung einrahmenden Spaltenbereiche, welche sich durch die Beabstandung der Einzellicht-Verteilungen zueinander ergeben, abgelenkt wird.

Die dunklen Randbereiche um die Einzellichtverteilungen werden somit ausschließlich mit Licht aus an diese Randbereiche angrenzenden Einzellichtverteilungen ausgeleuchtet, sodass bei einem Abschalten einzelner Einzellichtverteilungen die abgeschalteten Bereiche im Gesamtlichtbild nach wie vor dunkel erscheinen und nicht durch Streulicht "aus" anderen Einzellichtverteilungen beleuchtet sind.

Bevorzugt ist vorgesehen, dass ausgehend von einer betrachteten Einzellicht-Verteilung die Lichtintensität in einem angrenzenden Spalt in Richtung der benachbarten Einzellicht-Verteilung hin abnimmt, wobei die Abnahme vorzugsweise linear verläuft.

Nachdem ein Spalt mit einem Teil des Lichtes, welches für die beiden angrenzenden Einzellicht-Verteilungen bestimmt ist (im Kreuzungsbereich der Spalten einen Teil des Lichtes von vier Einzellicht-Verteilungen), beleuchtet wird, ergibt sich - insbesondere bei einem linearen Verlauf der Intensität - eine annähernd konstante Lichtintensität über den gesamten Spalt.

Insbesondere ist vorgesehen, dass die Lichtintensität auf Null abnimmt.

Außerdem ist mit Vorteil noch vorgesehen, dass die Lichtintensität in einem Spalt, unmittelbar an den Rand der betrachteten Einzellicht-Verteilung angrenzend, im Wesentlichen der Lichtintensität der Einzellicht-Verteilung der modifizierten Lichtverteilung an ihrem Rand bzw. der durchschnittlichen Lichtintensität in der Einzellicht-Verteilung der modifizierten Lichtverteilung entspricht.

Generell ist es von Vorteil, wenn die optische Struktur derart angeordnet und/oder ausgebildet ist, dass im Wesentlichen der gesamte, vorzugsweise der gesamte Lichtstrom der Beleuchtungsvorrichtung auf die optische Struktur auftrifft.

Auf diese Weise kann der gesamte Lichtstrom für die Modifikation der ursprünglichen Lichtverteilung herangezogen werden.

Insbesondere ist es von Vorteil, wenn die optische Struktur derart angeordnet und/oder ausgebildet ist, dass sie im Wesentlichen homogen ausgeleuchtet ist.

Schließlich betrifft die Erfindung noch eine Beleuchtungsvorrichtung mit zumindest einer, vorzugsweise genau einer oben beschriebenen optischen Struktur.

Beispielsweise ist die Beleuchtungsvorrichtung ein Projektionssystem.

Vorzugsweise ist in diesem Fall vorgesehen, dass die Beleuchtungsvorrichtung zumindest eine Lichtquelle, zumindest einen Reflektor und zumindest eine Linse, insbesondere eine Projektionslinse umfasst, und wobei vorzugsweise vorgesehen ist, dass die zumindest eine optische Struktur auf der Linse und/oder einer zusätzlichen Abdeck- oder Streuscheibe angeordnet ist.

Es kann aber auch vorgesehen sein, dass die Beleuchtungsvorrichtung ein Reflexionssystem ist.

Dabei ist es von Vorteil, wenn die Beleuchtungsvorrichtung zumindest einen Freiform-Reflektor und zumindest einen Lichtquelle sowie zumindest eine Streuscheibe und/oder zumindest eine Abdeckscheibe umfasst, und wobei vorteilhafterweise die zumindest eine optische Struktur auf der zumindest einen Streuscheibe und/oder der zumindest einen Abdeckscheibe und/oder einer zusätzlichen Abdeck- oder Streuscheibe angeordnet ist.

Im Folgenden ist die Erfindung an Hand der Zeichnung näher erläutert. In dieser zeigt
Fig. 1 eine schematische Darstellung eines Projektionsmoduls nach dem Stand der Technik,
Fig. 2 eine schematische Darstellung eines Reflexionsmoduls nach dem Stand der Technik,
Fig. 3 eine schematische Darstellung eines Projektionsmoduls mit einer erfindungsgemäßen optischen Struktur an der Außenseite einer Linse,
Fig. 4 eine schematische Darstellung eines Reflexionsmoduls mit einer erfindungsgemäßen optischen Struktur an der Außenseite einer Abdeck- oder Streuscheibe,
Fig. 5 eine schematische Darstellung eines Projektionsmoduls mit einer erfindungsgemäßen optischen Struktur auf einem zusätzlichen Optikelemente wie einer Scheibe,
Fig. 6 eine schematische Darstellung eines Reflexionsmoduls mit einer erfindungsgemäßen optischen Struktur auf einem zusätzlichen Optikelemente wie einer Scheibe,
Fig. 7 eine "herkömmliche", unmodifizierte Abblendlichtverteilung erzeugt mit einer Beleuchtungsvorrichtung nach dem Stand der Technik,
Fig. 7a einzelne, mit Bereichen einer Beleuchtungsvorrichtung nach dem Stand der Technik erzeugte Lichtflecken,
Fig. 7b eine größere Anzahl an Lichtflecken wie in Figur 7a dargestellt,
Fig. 8 eine modifizierte Abblendlichtverteilung erzeugt mit einer Beleuchtungsvorrichtung mit einer erfindungsgemäßen optischen Struktur,
Fig. 8a die Lichtflecken aus Figur 7a, modifizierte entsprechend einer Streufunktion zur kombinierten Gradientenaufweichung und Erzeugung eines Signlights,
Fig. 8b die Lichtflecken aus Figur 7b, entsprechend mit der Streufunktion modifiziert,
Fig. 9 eine Linse mit einer optischen Struktur in einer dreidimensionalen Ansicht, einen Ausschnitt aus der Linse in vergrößerter Darstellung, und weiters ein noch vergrößerten Ausschnitt aus dem bereits vergrößerten Ausschnitt,
Fig. 10 eine hexagonale Gitterstruktur,
Fig. 11 die Gitterstruktur aus Figur 10, besetzt mit optischen Strukturelementen mit kreisförmiger Basis,
Fig. 12 die optische Struktur aus Figur 11 in einer vergrößerten Darstellung im Bereich eines optischen Strukturelementes,
Fig. 13 eine hexagonale Anordnung von optischen Strukturelementen (Mikrostrukturen) mit kreisförmiger Basis und eine damit erzeugte Lichtverteilung in einer schematischen Prinzipdarstellung,
Fig. 14 eine Lichtverteilung, aufgebaut aus quadratischen Lichtsegmenten, und ihre Abbildung über eine optische Struktur wie in Figur 13 gezeigt,
Fig. 15 eine Gitterstruktur auf einer definierten Fläche, auf der optische Strukturelemente einer erfindungsgemäßen optischen Struktur angeordnet sind,
Fig. 16 das Gitter aus Figur 15 im Bereich eines optischen Strukturelementes samt unmittelbar angrenzender Strukturelemente in einer Ansicht von oben,
Fig. 17 der Ausschnitt aus Figur 16 in einer perspektivischen Ansicht,
Fig. 18 einen Schnitt entlang der Linie A-A aus Figur 16,
Fig. 19 einen Schnitt entlang der Linie B-B aus Figur 16,
Fig. 20 rein schematisch die Auswirkungen eines Strukturelementes mit quadratischer Basisfläche auf eine Lichtverteilung,
Fig. 21 eine unmodifizierte Lichtverteilung aufgebaut aus quadratischen Lichtsegmenten sowie die Abbildung des diese Lichtverteilung bildenden Lichtstroms mittels einer optischen Struktur mit quadratischen Strukturelementen, und
Fig. 22 den schematischen Verlauf der Lichtintensität in einer unmodifizierten und einer modifizierten Lichtverteilung.

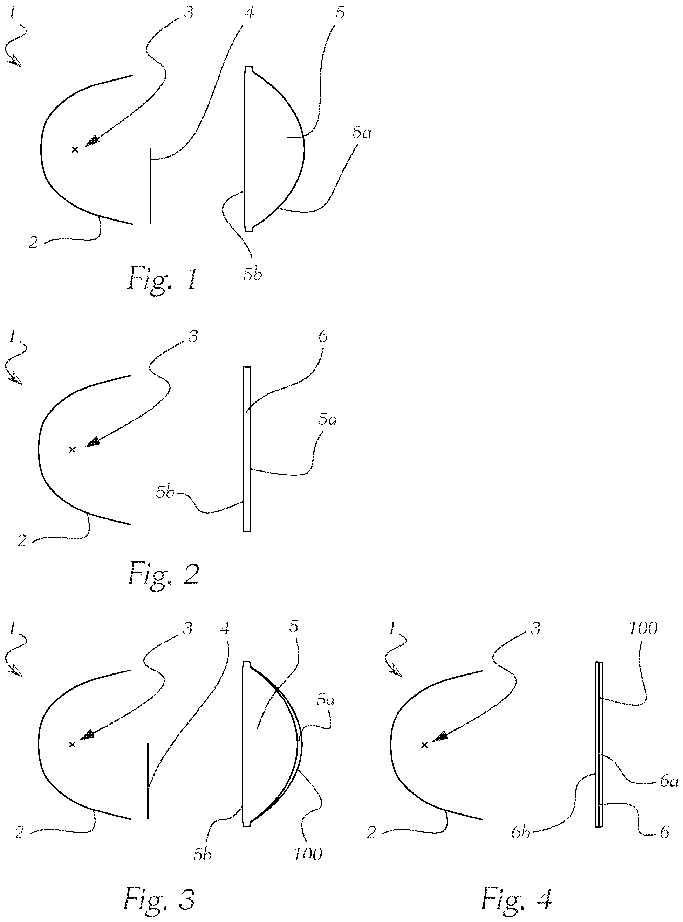

Im Folgenden wird vorerst auf die Figuren 1 - 6 Bezug genommen, welche - ohne Einschränkung des Schutzgegenstandes - prinzipielle Möglichkeiten der Anordnung einer erfindungsgemäßen optischen Struktur zeigen. Eine erfindungsgemäße optische Struktur kann auch bei anderen als den hier dargestellten Beleuchtungsvorrichtungen für Kraftfahrzeuge eingesetzt werden.

Figur 1 zeigt schematisch eine Beleuchtungsvorrichtung 1 in Form eines Projektionssystems, mit einem Reflektor 2, einer Lichtquelle 3, einer (optionalen) Blendenanordnung 4 und einer Projektionslinse 5, mit einer gekrümmte Außenseite 5a und einer Ebenen Innenseite 5b.

Figur 2 zeigt schematisch eine Beleuchtungsvorrichtung 1 in Form eines Reflexionssystems, mit einem Reflektor 2, einer Lichtquelle 3 und einer Streu- bzw. Abdeckscheibe 6, die Bezugszeichen 6a und 6b bezeichnen die Außenseite und die Innenseite der Scheibe 6.

Figur 3 zeigt eine schematische Darstellung des Projektionssystems aus Figur 1, wobei eine erfindungsgemäße optische Struktur 100 an der Außenseite einer Linse 5 angeordnet ist. Diese optische Struktur 100 nimmt dabei vorzugsweise die gesamte Außenseite 5a der Linse 5 ein.

Figur 4 zeigt eine schematische Darstellung des Reflexionsmoduls aus Figur 2 mit einer erfindungsgemäßen optischen Struktur 100 an der Außenseite der Abdeck- bzw. Streuscheibe 6, wobei vorzugsweise die optische Struktur die gesamte Außenseite der Scheibe 6 einnimmt.

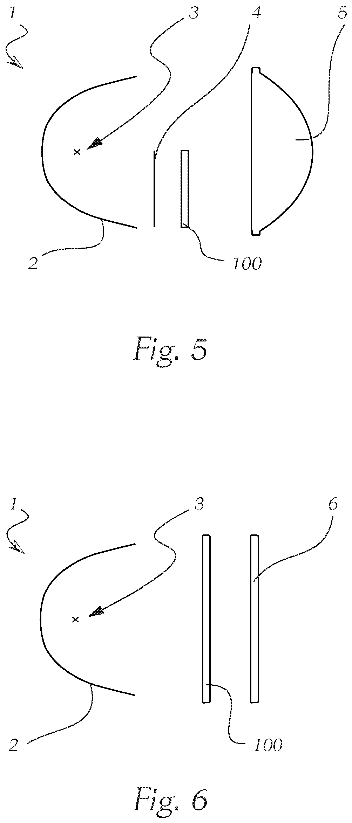

Figur 5 zeigt nochmals eine schematische Darstellung eines Projektionsmoduls 1 wie in Figur 1 dargestellt. mit einer erfindungsgemäßen optischen Struktur 100 auf einem zusätzlichen

Optikelemente wie einer Scheibe, wobei das Optikelement zwischen der Blende 4 und der Linse 5 angeordnet ist.

Figur 6 zeigt schließlich noch eine schematische Darstellung eines Reflexionsmoduls aus Figur 2 mit einer erfindungsgemäßen optischen Struktur 100 auf einem zusätzlichen Optikelemente wie einer Scheibe, welche zwischen der Lichtquelle 3 und der Streu- bzw. Abdeckscheibe 6 angeordnet ist.

Wie schon erwähnt dienen diese Darstellungen lediglich zur Veranschaulichung einiger der Möglichkeiten der Anordnung einer erfindungsgemäßen optischen Struktur 100. Grundsätzlich kann eine Beleuchtungsvorrichtung auch über mehrere Lichtquellen, beispielsweise über LEDs als Lichtquellen verfügen, und der Licht formende Körper kann in Form von einem oder mehreren Lichtleitern, Reflektoren, usw. ausgebildet sein.

Generell gilt, dass die optische Struktur 100 der Beleuchtungsvorrichtung 1 derart zugeordnet oder derart Teil der Beleuchtungsvorrichtung 1 ist, dass die optische Struktur 100 von im Wesentlichen dem gesamten (bzw. dem gesamten optisch relevanten) Lichtstrom der Beleuchtungsvorrichtung 1 durchstrahlt wird.

Insbesondere ist es von Vorteil, wenn die optische Struktur derart angeordnet und/oder ausgebildet ist, dass sie homogen ausgeleuchtet ist. Aus der Streufunktion kann für die Berechnung der optischen Struktur in diesem Fall einfach abgeleitet werden, welcher Bruchteil der Gesamtfläche wie stark brechen soll.

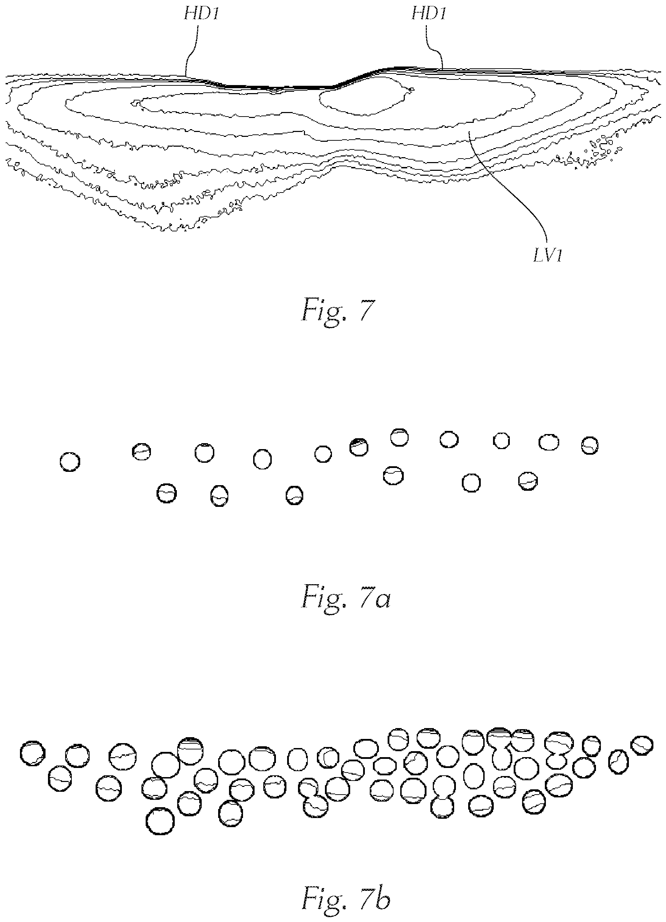

Figur 7 zeigt schematisch eine "herkömmliche", unmodifizierte Abblendlichtverteilung LV1, wie sie beispielsweise mit einer in Figur 1 gezeigten, bekannten Beleuchtungsvorrichtung 1 nach dem Stand der Technik erzeugt wird. Die Abblendlichtverteilung LV1 weist eine Hell-Dunkel-Grenze HD1 auf, welche in dem gezeigten Fall einen asymmetrischen Verlauf aufweist.

Figur 7a zeigt zur besseren Veranschaulichung der Wirkung einer erfindungsgemäßen optischen Struktur 100 einzelne, aus der Lichtverteilung LV1 herausgenommene Lichtflecken, Figur 7b zeigt eine noch größere Anzahl an solchen Lichtflecken.

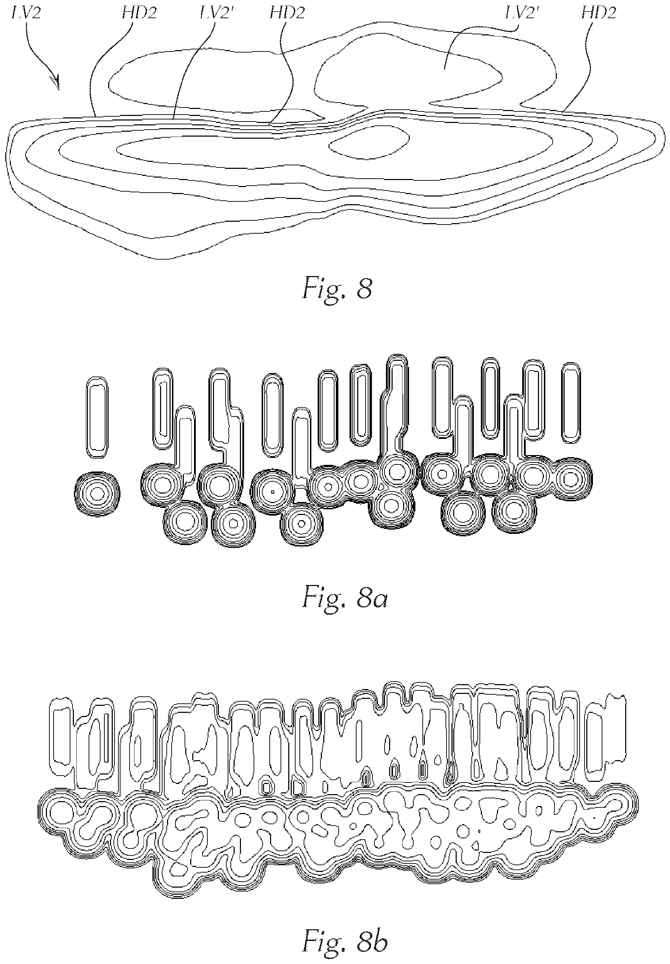

Betrachtet man nun Figur 8, so zeigt diese eine modifizierte Lichtverteilung LV2, wobei diese modifizierte Lichtverteilung LV2 durch Modifikation der ursprünglichen Lichtverteilung durch die optische Struktur 100 entsteht. Die modifizierte Lichtverteilung LV2 ergibt sich dabei durch Faltung der unmodifizierten Lichtverteilung LV1 mit einer Streufunktion PSF, wobei die optische Struktur 100 derart ausgebildet ist, dass die unmodifizierte Lichtverteilung LV1 entsprechend der Streufunktion PSF zu der neuen Lichtverteilung LV2 modifiziert wird.

Die modifizierte Lichtverteilung LV2 verfügt dabei über die im Wesentlichen selbe Verteilungsform wie die unmodifizierte Lichtverteilung LV1 und weist ebenfalls eine Hell-Dunkel-Grenze HD2 auf, welche allerdings einen geringeren Gradienten aufweist, wie dies durch den größeren Abstand der Isolux-Linien im Bereich der Hell-Dunkel-Grenze schematisch angedeutet ist. Die Hell-Dunkel-Grenze HD2 ist somit "weicher".

Weiters ist in Figur 8 noch zu erkennen, dass auch ein Bereich LV2' oberhalb der Hell-Dunkel-Grenze HD2 mit einer gewissen Beleuchtungsstärke beleuchtet wird, um ein Signlight zu erzeugen.

Eine Beleuchtungsvorrichtung erzeugt somit - ohne optische Struktur - in dem gezeigten Beispiel eine Abblendlichtverteilung LV1 mit einer Hell-Dunkel-Grenze HD1 mit einer gewissen Schärfe, beschrieben durch den sogenannten "Gradienten". Durch Vorsehen einer optischen Struktur 100 wird diese - unmodifizierte - Lichtverteilung LV1 derart modifiziert, dass die Schärfe der Hell-Dunkel-Grenze verringert wird, sodass sie den gesetzlichen Anforderungen entspricht und vom menschlichen Auge als angenehm wahrgenommen wird.

Außerdem wird bei der beschriebenen Ausführungsform ein Anteil des Lichtstroms der Beleuchtungsvorrichtung 1 in einen Bereich LV2' oberhalb der Hell-Dunkel-Grenze HD2 abgebildet. Auf diese Weise kann mit der erfindungsgemäßen optischen Struktur 100 auf optimale Weise ein eingangs beschriebenes Signlight erzeugt werden, indem beispielsweise jedes optische Strukturelement einen geringen Anteil des durch das Strukturelement durchtretenden Lichtstromes in einen entsprechenden Bereich ablenkt.

Bei der konkreten Ausführungsform wie gezeigt liegt dabei der von der optischen Struktur abgelenkte Lichtstrom in einem Bereich LV2' zwischen 1,5° und 4°, insbesondere zwischen 2° und 4° über der HH-Linie.

Bei einer beispielhaften Ausführungsform der Erfindung ist vorgesehen, dass von der optischen Struktur 0,5% - 1 % des Lichtstroms der Beleuchtungsvorrichtung 1 in einen Bereich LV2' oberhalb der Hell-Dunkel-Grenze HD2 abgelenkt wird.

Betrachtet man die Figuren 8a und 8b, so zeigen diese die einzelnen Lichtflecken wie in Figur 7a und 7b gezeigt, modifiziert durch eine erfindungsgemäße optische Struktur 100 zur Gradientenaufweichung und gleichzeitigen Erzeugung eines Signlights. Wie zu erkennen ist, werden die einzelnen Lichtflecken - zumindest im Bereich der Hell-Dunkel-Grenze - verschmiert (Aufweichung), gleichzeitig wird ein (geringer) Teil des Lichtstromes, welcher ohne optische Struktur zu den Lichtflecken wie in Figur 7a und 7b gezeigt beiträgt, in einen Bereich oberhalb dieser Lichtflecken zur Bildung eines Signlights abgelenkt.

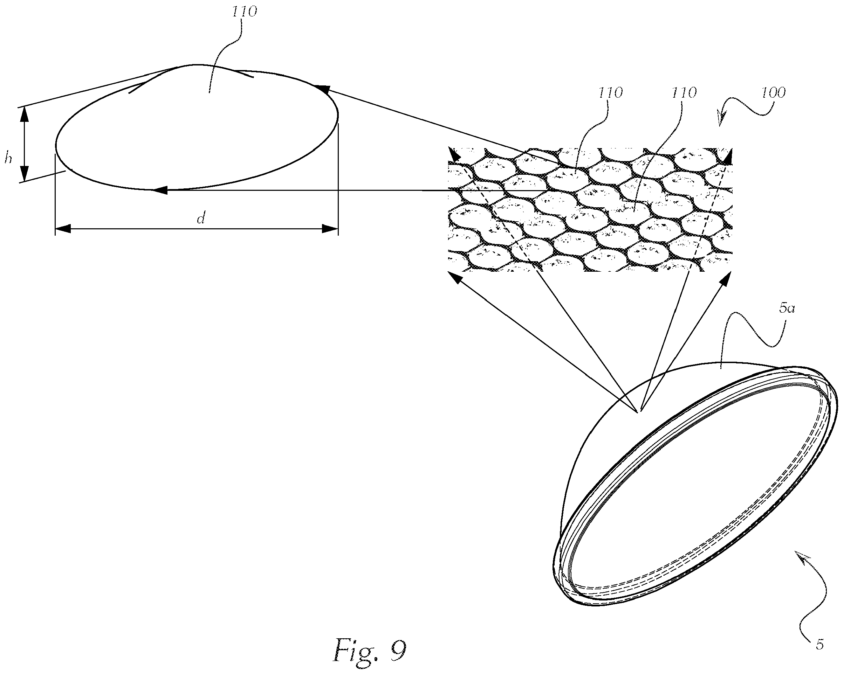

Figur 9 zeigt als Beispiel noch einmal die bereits bekannte Linse 5, welche an ihrer Außenseite eine optische Struktur 100 aufweist, welche aus einzelnen Strukturelementen 110 besteht. Ein einzelnes Strukturelement 110 mit einem Durchmesser d und einer Höhe h ist ebenfalls schematisch in Figur 9 gezeigt.

Nochmals zurückkommend auf Figur 9 ist zu erkennen, dass bei der gezeigten Ausführungsform der Erfindung die Strukturelemente 110 an ihrer Basis einen Kreisquerschnitt aufweisen. Bei einer gekrümmten definierten Fläche, auf welcher die Strukturelemente angeordnet sind, wird dabei die Projektion der Basis - das ist die auf der definierten Fläche von einem Strukturelement eingenommenen Fläche - in eine Ebene betrachtet.

Strukturelemente sind somit vorzugsweise im Wesentlichen rotationssymmetrisch, können aber je nach Anwendung unterschiedliche Deformationen, d.h. Abweichungen von dieser rotationssymmetrischen Struktur aufweisen, wobei diese Deformationen großflächig sein können, in der Regel aber lokal ausgebildet sind.

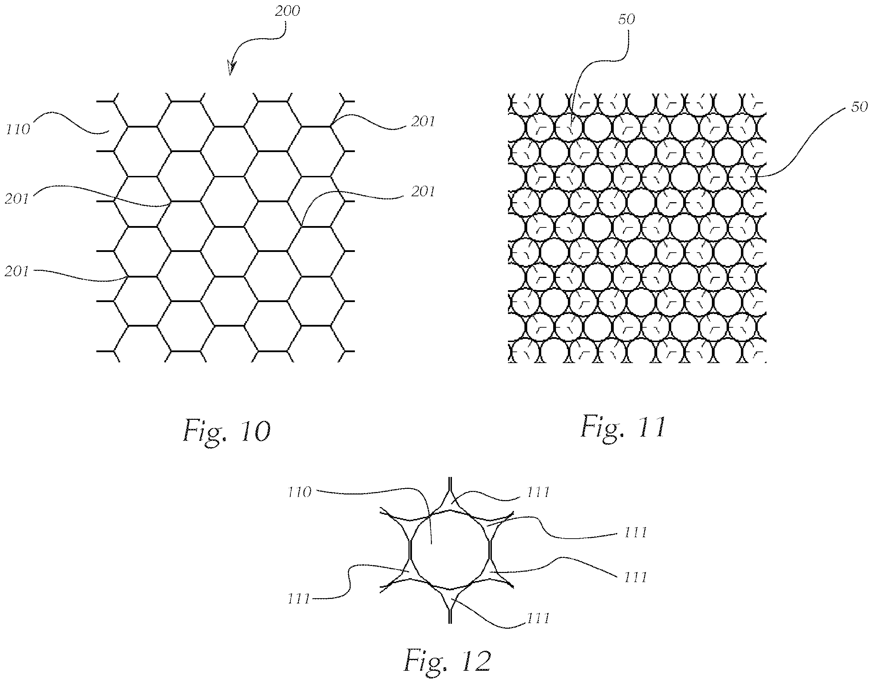

Die Strukturelemente 110 sitzen auf den Gitterpunkten 201 eines hexagonalen Gitters 200 angeordnet (siehe Figur 10). Figur 11 zeigt, wie auf jedem Gitterpunkt 201 der Gitterstruktur 200 ein Strukturelement 110 mit kreisförmiger Basis sitzt.

Bei der gezeigten Ausführungsform, bei welcher die Gitterstruktur ein hexagonales Gitter 200 bildet, kann eine Flächenfüllung der definierten Fläche von ca. 87% der definierten Fläche mit Strukturelementen 110 erzielt werden, ca. 13% unmodifizierte Fläche 111 (siehe Figur 12) sind nicht von einem Strukturelement bedeckt.

Eine oben beschriebene optische Struktur mit optischen Strukturelementen mit einer kreisförmigen Basis in einem hexagonalen Gitter eignet sich besonders gut für den an Hand der Figuren 7 und 8 erläuterten Fall einer Gradientenaufweichung der HD-Linie einer Abblendlichtverteilung, ggf. zusammen mit der Erzeugung eines Signlights.

Bei einem Einsatz im Zusammenhang mit segmentierten Lichtverteilungen, insbesondere solchen mit viereckiger Gestalt, sind solche oben beschriebene optische Strukturelemente oftmals nicht optimal, wie dies im Folgenden erläutert wird.

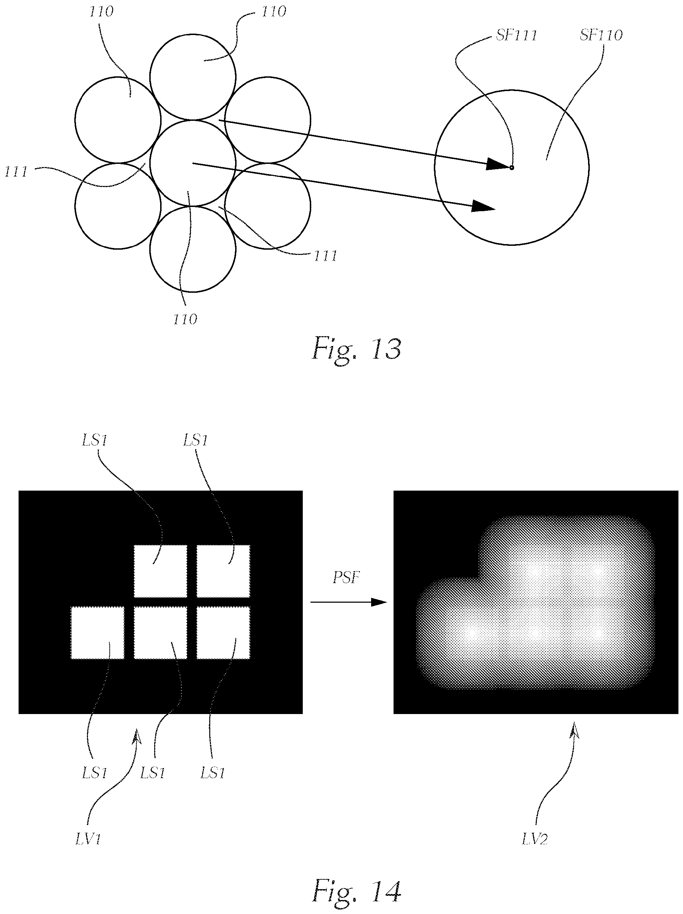

Figur 13 zeigt noch einmal die oben schon beschriebene hexagonale Anordnung der Mikrostrukturen (optischen Strukturelemente) 110, wobei die Mikrostrukturen 110 eine kreisförmige Basis aufweisen. Zwischen den Mikrostrukturen 110 befinden sich, wie auch in Figur 12 gezeigt, unstrukturierte Stellen 111, also nicht modifizierte Bereiche (beispielsweise einer Linsenoberfläche).

Während die Mikrostrukturen 110 mit kreisförmiger Basis für eine kreisförmige Streufunktion SF110 sorgen, siehe Figur 13 rechts, Licht (d.h. ein Lichtbündel) also in einen kreisförmigen Bereich (bei Projektion in eine Ebene) streuen, streut der unmodifizierte Bereich 111 nicht, ein Punkt eines Objektes (d.h., z.B. einer Lichtquelle) wird "ideal" als Punkt SF111 abgebildet. Das Streubild einer optischen Struktur aus Figur 13 weist somit ein Maximum in ihrem Zentrum auf.

Die nicht veränderten Bereiche 111 der (Linsen-)oberfläche führen somit aber zu einer idealen Abbildung des Objektes und somit bei scharf abgegrenzten, abzubildenden Lichtsegmenten zu scharfen Segmentgrenzen, d.h. bei Verwendung einer derartigen optischen Struktur bleiben die scharfen Segmentgrenzen nach wie vor erhalten.

Figur 14 zeigt in ihrem linken Bereich eine schematische Lichtverteilung LV1, welche aus mehreren Lichtsegmenten LS1 gebildet ist. Die Lichtsegmente LS1 sind in diesem Beispiel rechteckig, weisen scharfe Begrenzungsseiten auf und benachbarte Lichtsegmente sind zueinander geringfügig beabstandet.

Bildet man diese Lichtverteilung LV1 über eine optische Struktur wie in Figur 13 gezeigt ab, so ergibt sich eine Lichtverteilung LV2, wie in Figur 14, rechts, gezeigt. Einerseits, wie an Hand von Figur 13 beschrieben, werden die Begrenzungsseiten der Lichtsegmente nach wie vor scharf abgebildet, wenn auch abgeschwächt im Vergleich zu der ursprünglichen Lichtverteilung LV1, andererseits fällt auf, dass durch die kreisrunde Basis der Mikrostrukturen 111 (und somit eine kreisrunde Streufunktion PSF) das Ausleuchten der Eck-Bereiche zwischen den Lichtsegmenten erschwert ist.

Mit einer kreisförmigen Streufunktion bzw. Mikrostrukturelementen 110 mit kreisförmiger Basis kann somit zwar der nachteilige Gittereffekt, d.h. dunkle Streifen zwischen den Lichtsegmenten, wie er in Figur 14, linkes Bild, deutlich zu erkennen ist, abgemildert werden, allerdings ist das Ergebnis nicht optimal.

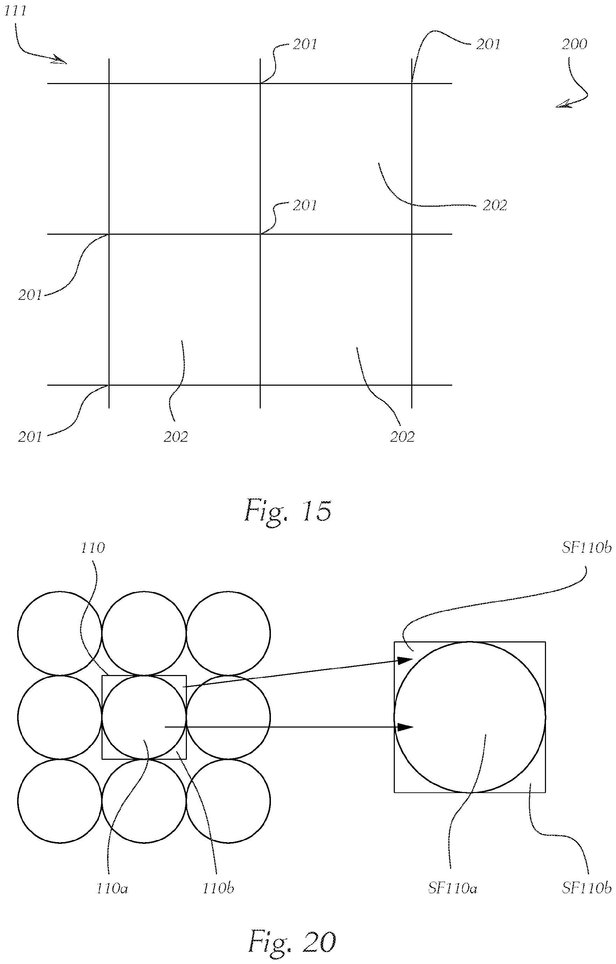

Figur 15 zeigt eine definierte Fläche 111, etwa die ebene Innen- oder Außenseite einer Scheibe oder die Lichteintritts- oder Lichtaustrittsfläche einer Linse. Im Falle einer gekrümmten Oberfläche einer Linse stellt die Fläche 111 eine Projektion dieser gekrümmten Oberfläche in eine Ebene dar, vorzugsweise in eine Ebene, welche normal auf die optische Achse der Linse steht.

Die Fläche 111 ist (gedanklich) in ein Gitter 200 unterteilt, welches in dem gezeigten bevorzugten Fall eine quadratische Struktur aufweist. Jede Fläche 202 zwischen vier Eckpunkten 201 wird vollständig von der Grundfläche von genau einem optischen Strukturelement 110 bedeckt, jedes licht streuende Strukturelement 110 weist somit eine quadratische Grundfläche auf.

Die viereckige Grundfläche der optischen Strukturelemente ist dabei von geraden Seiten begrenzt, d.h. zwei benachbarte Eckpunkte der Grundfläche eines optischen Strukturelementes sind jeweils mit einer geraden Seite verbunden, wobei sich diese Aussage ein ebenes Gitter bezieht.

Wesen der vorliegenden Erfindung ist es, dass dadurch, dass das Gitter viereckig ist und die Grundfläche des Strukturelementes die gesamte Fläche einer Gitterzelle einnimmt, die gesamte Oberfläche der "Grundstruktur" für die Modifikation der Lichtverteilung herangezogen werden kann. Bei einem hexagonalen Gitter mit kreisförmigen Strukturelementen, wo ebenfalls bereits eine sehr hohe Flächenfüllung von ca. 90 % mit den Strukturelementen erreicht wird, bleibt trotzdem ein geringer Anteil der Grundfläche von ca. 10 % unmodifiziert und trägt nicht zur Modifikation des Lichtbildes bei.

In einer parallelen Patentanmeldung der Anmelderin ist eine eingangs erwähnte optische Struktur beschrieben, welche aus optischen Strukturelementen gebildet ist, welche eine kreisförmige Basis aufweisen und in einem hexagonalen Gitter angeordnet sind. Bei einer solchen hexagonalen Anordnung können auf der gekrümmten Grenzfläche einer Linse ca. 91% dieser Fläche mit Strukturelementen bedeckt werden, ca. 9% der Linsenoberfläche bleiben unbedeckt. Bei der Abbildung von scharf begrenzten Lichtsegmenten mit einer solchen Linse, z.B. bei rechteckigen Lichtsegmenten, führen diese unbedeckten Bereiche der Linsenoberfläche zu scharfen Abbildung der Kanten der Lichtsegmente und damit zu Inhomogenitäten im Lichtbild.

Mit der vorliegenden Anordnung, bei welche die Linsenoberfläche zu 100% mit den Strukturelementen bedeckt ist, kann auch mit scharf begrenzten Lichtsegmenten, welche mit der Linse in einen Bereich vor dem Fahrzeug abgebildet werden, ein homogenes Lichtbild erzeugt werden, wie dies noch erläutert wird.

Durch die viereckige Form der Basisfläche der Strukturelemente, welche von der Symmetrie her vorzugsweise der Symmetrie der Lichtsegmente entsprechen, können außerdem die Eckbereiche zwischen vier Lichtsegmenten optimal ausgeleuchtet werden, was mit Strukturelementen mit kreisförmiger Basis nicht möglich ist.

Entsprechend der Symmetrie der mit der optischen Struktur zu modifizierenden Lichtsegmente LS1 (siehe Figur 14) ist bei der gezeigten Ausführungsform der Erfindung somit vorgesehen, dass die Grundfläche jedes optischen Strukturelementes 110 jeweils die Form eines Quadrates 202 aufweist.

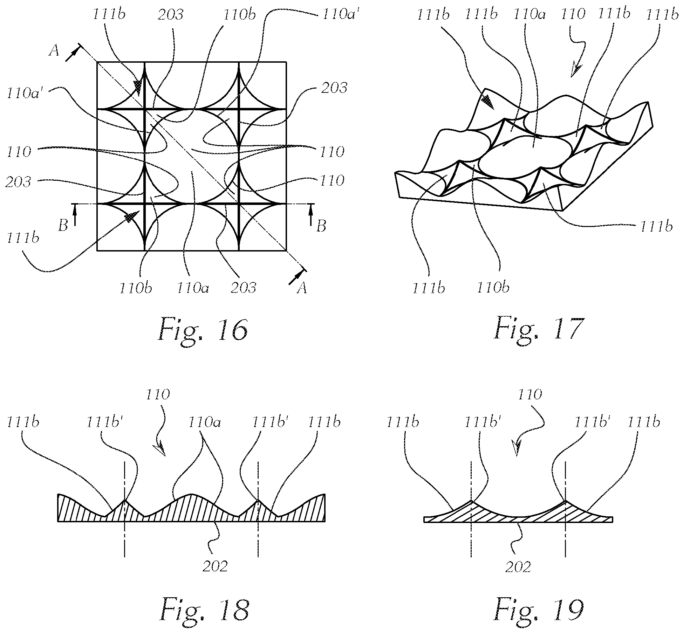

Eine konkrete Ausgestaltung eines Strukturelementes 110 wird unter Bezugnahme auf die Figuren 16 - 19 im Folgenden näher erörtert. Das Gitter 200 ist vollständig mit solchen Strukturelementen besetzt, wobei alle Strukturelemente bei - gedachter ebener Fläche 111 - identisch ausgebildet und ausgerichtet sind.

Wie den Figuren 16 - 19 zu entnehmen ist, weist das optische Strukturelemente 110 in ihrem Zentrum eine Zentralerhebung 110a mit kreisförmiger Basis auf. Um eine vollständige Bedeckung eines Quadrates 202 erreichen zu können, ist vorgesehen, dass sich die Basis 110a' der Zentralerhebung 110a bis zu den vier Begrenzungsseiten 203 der viereckigen Grundfläche 202 des Strukturelementes 110 erstreckt.

Vorzugsweise weist die Zentralerhebung 110a einen über ihre gesamte Oberfläche stetigen Verlauf auf.

Die Zentralerhebung 110a weist ihren maximalen Abstand zu der Grundfläche im geometrischen Mittelpunkt ihrer Grundfläche auf, erreicht ihre maximale Höhe also im geometrischen Mittelpunkt des Quadrates 202.

Ihren minimalen Abstand zu der Grundfläche 111/202 weist die Zentralerhebung 110a an ihrem Kreisumfang auf, der in der gezeigten Ausführungsform > 0 ist.

In den Eckbereichen weist das Strukturelement 110 eine Eckbereichs-Erhebung 110b auf. Diese Eckbereichs-Erhebung 110b ist durch eine Seitenfläche einer pyramidenartigen Erhebungen 111b gebildet.

Durch die pyramidenartigen Erhebungen wird es möglich, eine an und für sich kreisrunde Mikrostruktur, also eine Mikrostruktur (optisches Strukturelement) mit kreisrunder Basis in ein rechteckiges, insbesondere quadratisches Gitter "einzubauen", und so 100% Bedeckungsgrad der definierten Fläche, auf welcher die optische Struktur angeordnet ist, zu erreichen.

Pyramidenartige Erhebungen 111b sitzen an allen Eckpunkten 201 des Gitters 200, und die vier Seitenflächen 110b der an einem Gitterpunkt liegenden Strukturelemente bilden somit gemeinsam die pyramidenartige Erhebung. Eine pyramidenartige Erhebung 111b ist durch vier symmetrisch um den Gitterpunkt 201 angeordnete Eckpunkte begrenzt. Diese Eckpunkte liegen jeweils auf einer Begrenzungsseite eines an der der Erhebung 111b beteiligten Strukturelementes 111, wobei die Eckpunkte in dem gezeigten Beispiel genau in der Hälfte dieser Begrenzungsseiten 203 liegen.

Benachbarte Eckpunkte der pyramidenartigen Erhebung sind durch gekrümmte, insbesondere nach innen gekrümmte bzw. nach innen gebogene Begrenzungsseiten miteinander verbunden.

Die Spitzen 111b' der pyramidenartigen Erhebungen 111b liegen wie gezeigt exakt über einem Gitterpunkt 201 des Gitters 200.

Das gezeigte optische Strukturelement 110 ist in Bezug auf seine Diagonale A-A symmetrisch, insbesondere spiegelsymmetrisch ausgebildet.

Weiters ist zu erkennen, dass in einem Schnitt durch die pyramidenartige Erhebung 111b entlang einer Ebene normal auf die Grundfläche 202 entlang der Diagonalen A-A die Eckbereichs-Erhebungen 110b einen im Wesentlichen linearen Anstieg zu ihrer Spitze 111b' hin aufweisen (Figur 18).

Außerdem kann vorgesehen sein, dass in einem Schnitt B-B durch eine pyramidenartige Erhebung 111b entlang einer Ebene normal auf die Grundfläche 202 entlang einer Begrenzungsseite 203 die Eckbereichs-Erhebungen 110b einen im Wesentlichen konkaven Verlauf aufweisen (Figur 19).

Vorzugsweise ist vorgesehen, dass die Zentralerhebung 110a und die Eckbereichs-Erhebungen 110b stetig ineinander über gehen. Auf diese Weise lassen sich die optische Strukturen wesentlich einfacher herstellen, da stetige Flächen wesentlich leichter abformbar sind, etwa in einem Spritzgussprozess, als nicht stetige Oberflächen. Der Übergang ist dabei vorzugsweise C0-stetig.

Figur 20 zeigt schematisch die "Auswirkungen" eines Strukturelementes im Vergleich zu Figur 13. Wie in Figur 13 auch erzeugt die kreisförmige Struktur 110a (ähnlich wie die Mikrostruktur 110 in Figur 13) eine kreisförmige Verstreuung SF110a eines Lichtbündels. Während aber in Figur 13 der unmodifizierte Bereich 111 zu einer "idealen" Abbildung SF111 des durch den Bereich 111 durchtretenden Lichtes führt, ist bei einem Strukturelement 110 gemäß Figur 20 der Bereich außerhalb der kreisförmigen Struktur 110a mit der Struktur 110b wie oben beschrieben versehen, diese führt vereinfacht dargestellt zu einer Streuung des durchtretenden Lichtes in die "Eckbereiche" SF110b, sodass keine "ideale Abbildung" eines Lichtbündels ohne Streuung erfolgt, sondern Licht entsprechend wie gezeigt teilweise verstreut wird.

Konkret ist dabei vorgesehen, dass eine modifizierte Lichtverteilung LV2 durch Faltung einer unmodifizierten Lichtverteilung LV1 mit einer Streufunktion PSF gebildet ist, und wobei die optische Struktur 100 derart ausgebildet ist, dass die unmodifizierte Lichtverteilung LV1 entsprechend der Streufunktion modifiziert ist.

Ein optisches Streuelement mit einer eckigen, insbesondere einer viereckigen, vorzugsweise einer quadratischen Basisfläche realisiert eine eckige, insbesondere viereckige, vorzugsweise quadratische Streufunktion (siehe Figur 20), mit den insbesondere für segmentierte, eckige, insbesondere für viereckige, vorzugsweise quadratische Lichtsegmente beschriebenen Vorteilen.

Gemäß der Erfindung wird somit die gesamte optische Struktur betrachtet, und diese wird entsprechend über eine Streufunktion derart modifiziert bzw. geformt, dass sich das vollständige gewünschte Lichtbild ergibt. Anders als im Stand der Technik wird entsprechend der vorliegenden Erfindung die gewünschte (modifizierte) Lichtverteilung, ausgehend von einer unmodifizierten, mit der Beleuchtungsvorrichtung ohne optische Struktur erzeugten Lichtverteilung, dadurch realisiert, dass die unmodifizierte Lichtverteilung mit einer solchen Streufunktion gefaltet ist, dass sich die gewünschte Lichtverteilung ergibt, und die optische Struktur in ihrer Gesamtheit wird dann derart geformt, dass sie den gesamten Lichtstrom der Beleuchtungsvorrichtung derart modifiziert, dass sich aus der unmodifizierten Lichtverteilung eine der Streufunktion entsprechend modifizierte Lichtverteilung ergibt.

Dabei vorgesehen, dass die Strukturelemente 110 über zumindest eine, vorzugsweise genau eine definierte Fläche 111 zumindest eines, vorzugsweise genau eines Optikelementes 5, 6 verteilt sind, wobei es von besonderem Vorteil ist, wenn die optischen Strukturelemente 110 derart ausgebildet sind, dass jedes Strukturelement 110 das durch das Strukturelement 110 durchtretende Lichtbündel entsprechend der Streufunktion PSF zu einem modifizierten Lichtbündel LB2 modifiziert.

Betrachtet man ein bestimmtes (unmodifiziertes) Lichtbündel aus dem gesamten Lichtstrom, so bildet dieses einen gewissen Beitrag zu der Lichtverteilung im Lichtbild (der gesamte Lichtstrom erzeugt die (Gesamt)-Lichtverteilung). Ein Strukturelement modifiziert nun ein durch das Strukturelement durchtretende Lichtbündel derart, dass der unmodifizierte Beitrag zu der Gesamtlichtverteilung entsprechend der Streufunktion verändert wird. Beispielsweise erzeugt das unmodifizierte Lichtbündel einen Lichtverteilungsbeitrag mit einer bestimmten Form, d.h. es werden bestimmte Bereiche auf der Fahrbahn oder auf einem Messschirm beleuchtet, andere Bereiche sind unbeleuchtet. Durch das Strukturelement werden nun entsprechend der Streufunktion auch Bereiche außerhalb des ursprünglich beleuchteten Bereiches mit einer bestimmten Intensität beleuchtet, während - nachdem der Gesamtlichtstrom konstant bleibt - die Intensität zumindest in Teilen des mit dem unmodifizierten Lichtbündel ursprünglich beleuchteten Bereiches reduziert ist.

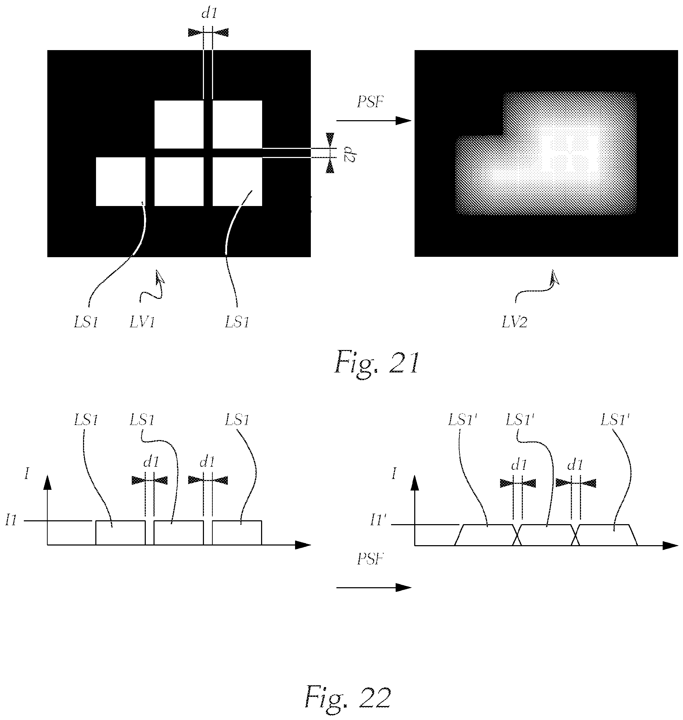

Figur 21 zeigt in dem linken Bild noch einmal eine unmodifizierte Lichtverteilung wie in Figur 14 (links Bild) bereits dargestellt. Mit einer erfindungsgemäßen optischen Struktur wie oben beschrieben kann somit eine wesentlich bessere Verstreuung als mit einer kreisrunden Mikrostruktur (siehe Figur 14) erreicht werden, die Gitterstruktur aus Figur 14 (rechts Bild) ist in Figur 21 (rechtes Bild) nicht mehr oder nur noch in einem nicht mehr störenden und gesetzeskonformen Ausmaß erkennbar.

Wie in Figur 21 zu erkennen, weisen benachbarte Einzellicht-Verteilungen LS1 in horizontaler Richtung einen Abstand d1 auf, wobei alle Abstände d1 identisch sind. Weiter weisen benachbarte Verteilungen LS1 in vertikaler Richtung Abstände d2 auf, wobei alle vertikalen Abstände identisch sind. Vorzugsweise gilt weiters d1 = d2.

Die Verteilungen bzw. Lichtsegmente LS1 weisen typischerweise, aber nicht einschränkend, eine Breite und/oder eine Höhe von ca. 1° aufweisen. Bei rechteckigen Lichtsegmenten weisen diese üblicherweise in vertikaler Höhe eine (etwas) größere Ausdehnung auf als in horizontaler Richtung.

Durch den Abstand der Lichtsegmente LS1 bilden sich im Lichtbild dunkle Spalten. Die Breite dieser Spalten (welche den Abständen d1, d2 entspricht), ist dabei typischerweise kleiner gleich 0,5° und größer 0°, in der Regel kleiner gleich 0,2° oder kleiner gleich 0,1°. Ein typischer Bereich für die Breite d1, d2 der Spalten liegt zwischen 0,05° und 0,15°.

Die Lichtintensität ist in allen Einzellicht-Verteilungen LS1 im Wesentlichen identisch, ebenso ist vorteilhafterweise die Intensität in den Einzellicht-Verteilungen LS1 im Wesentlichen homogen über die gesamte Fläche der Einzellicht-Verteilung, wie dies in Figur 21, linke Seite schematisch angedeutet ist.

Durch die optische Struktur wird ein Teil jenes Lichtstroms, welcher ohne optische Struktur ausschließlich eine Einzellicht-Verteilung (LS1) erzeugt, in die diese Einzellicht-Verteilung (LS1) einrahmenden Spaltenbereiche, welche sich durch die Beabstandung der Einzellicht-Verteilungen (LS1) zueinander ergeben, abgelenkt.

Die dunklen Randbereiche um die Einzellichtverteilungen werden somit ausschließlich mit Licht aus an diese Randbereiche angrenzenden Einzellichtverteilungen ausgeleuchtet, sodass bei einem Abschalten einzelner Einzellichtverteilungen die abgeschalteten Bereiche im Gesamtlichtbild nach wie vor dunkel erscheinen und nicht durch Streulicht "aus" anderen Einzellichtverteilungen beleuchtet sind.

Figur 22 zeigt schematisch den Verlauf der Lichtintensität bei einem unmodifizierten Lichtbild. In den Lichtsegmenten LS1 ist die Lichtintensität I konstant auf einem Wert I = I1, in den Spalten beträgt die Intensität I = 0.

Mit der optischen Struktur wird nun ein Teil jenes Lichtstromes, welcher exakt ein Lichtsegment LS1 bildet, in die angrenzenden Ränder gestreut. Dadurch erniedrigt sich die Intensität in den modifizierten Lichtsegmenten LS1' auf einen Wert I1' (wobei die Form der Segmente LS1' weiterhin den unmodifizierten Lichtsegmenten LS1 entspricht), allerdings wird ein Teil des Lichtes für das ursprüngliche Segment LS1 in die angrenzenden Ränder gestreut. Die Menge des bestreuten Lichtes ist dabei derart über die optische Struktur gewählt (bzw. die optische Struktur entsprechend ausgestalten), dass in einem Spalt wie in Figur 22, rechte Seite dargestellt, die Intensität von I = I1' am Rand des betrachteten Lichtsegmentes LS1' beträgt und dann linear auf den Wert I = 0 abnimmt, wobei I = 0 am Rand des angrenzenden Lichtsegmentes LS1' erreicht wird. Auf diese Weise kann eine Gesamt-Intensität im Spalt von I = I1' erreicht werden (Figur 22), da sich die Intensitäten des Streulichtes aus den beiden angrenzenden Lichtsegmenten addieren.

Mit quadratischen Strukturelementen 110 kann also eine rechteckige bzw. wie gezeigt quadratische Streufunktion (Figur 20, 21) realisiert werden, mittels welcher die Spalten und insbesondere auch die "Kreuzungsbereiche" von vier benachbarten Lichtsegmenten optimal ausgeleuchtet werden können, um die Homogenität des Lichtbildes zu erhöhen.

Dadurch, dass keine unmodifizierten Bereiche vorliegen, erfährt der gesamte durch ein Strukturelement 110 durchtretende Lichtstrom in gewissem Ausmaß eine Streuung, sodass außerdem scharfe Kante nicht mehr völlig scharf sondern aufgeweicht abgebildet werden.

Dadurch, dass die gesamte Grundfläche von optischen Strukturelementen eingenommen wird in Folge der 100% Flächenfüllung, werden die Begrenzungskanten nicht mehr absolut scharf abgebildet. Mit den pyramidenartigen Erhebungen kann zusätzlich der Bereich zwischen vier benachbarten Lichtsegmenten optimal ausgeleuchtet werden, sodass sich in allen Bereichen zwischen den Lichtsegmenten einen homogene Lichtverteilung ergibt, bei Abschalten eines (oder mehrerer) Lichtsegmente(s) der ausgeblendete Bereich zwar ausreichend scharf, aber mit verwaschener Begrenzungsseite abgebildet wird, sodass diese nicht als störend empfunden wird.

Allgemein gilt, dass es von Vorteil ist, wenn die Abmessung eines Strukturelementes 110, in dem gezeigten Fall somit die Länge der Diagonale bzw. einer Seitenlänge des Viereckes und/oder die Höhe (das ist der maximale Normalbstand der Oberfläche des Strukturelementes von der definierten Fläche) des Strukturelementes 110, größer, insbesondere sehr viel größer als die Wellenlänge von sichtbarem Licht ist/sind, sodass Beugungseffekte vermieden werden können.

Konkret liegt dabei die Höhe der Strukturelemente 110 im µm-Bereich.

Beispielsweise liegt die Höhe der Strukturelemente 110 im Bereich von 0,5 - 5 µm, wobei vorzugsweise die Höhe h der Strukturelemente 110 im Bereich von 1 - 3 µm liegt.

Bei einer konkreten Ausführungsform beträgt die Höhe der Strukturelemente 110 ca. 2,7 µm.

Weiters ist bei einer konkreten Ausführungsform, z.B. bei Varianten mit den oben beschriebenen Höhen, vorgesehen, dass die Länge der Diagonale bzw. die Länge der Seiten der Basisfläche der Strukturelemente 110 im Millimeter-Bereich liegt.

Beispielsweise liegt die Länge der Diagonale bzw. die Länge der Seiten der Strukturelemente 110 zwischen 0,5 - 2 mm, wobei vorzugsweise die Länge der Diagonale bzw. die Länge der Seiten der Strukturelemente 110 ca. 1 mm beträgt.

Bei einer beispielhaften Ausführungsform einer Linse, auf welcher die Strukturelemente angeordnet sind, beträgt der Durchmesser der Linse 90 mm.

Von besonderem Vorteil ist es, wenn die optischen Strukturelemente 110 derart ausgebildet sind, dass jedes Strukturelement 110 das durch das jeweilige Strukturelement 110 durchtretende Lichtbündel entsprechend der Streufunktion PSF zu einem modifizierten Lichtbündel modifiziert.

Betrachtet man ein bestimmtes (unmodifiziertes) Lichtbündel aus dem gesamten Lichtstrom, so bildet dieses einen gewissen Beitrag zu der Lichtverteilung im Lichtbild (der gesamte Lichtstrom erzeugt die (Gesamt)-Lichtverteilung). Ein Strukturelement modifiziert nun ein durch das Strukturelement durchtretendes Lichtbündel derart, dass der unmodifizierte Beitrag zu der Gesamtlichtverteilung entsprechend der Streufunktion verändert wird. Beispielsweise erzeugt das unmodifizierte Lichtbündel einen Lichtverteilungsbeitrag mit einer bestimmten Form, d.h. es werden bestimmte Bereiche auf der Fahrbahn oder auf einem Messschirm beleuchtet, andere Bereiche sind unbeleuchtet. Durch das Strukturelement 110 werden nun entsprechend der Streufunktion PSF auch Bereiche außerhalb des ursprünglich beleuchteten Bereiches mit einer bestimmten Intensität beleuchtet, während - nachdem der Gesamtlichtstrom konstant bleibt - die Intensität zumindest in Teilen des mit dem unmodifizierten Lichtbündel ursprünglich beleuchteten Bereiches reduziert ist.

Wie im Zusammenhang mit Figur 9 erwähnt, ist es von Vorteil, wenn die gesamte definierte Fläche 5a mit den optischen Strukturelementen 110 bedeckt ist.

Weiters ist es von besonderem Vorteil, wenn alle Strukturelemente 110 im Wesentlichen identisch ausgebildet sind. Jedes Strukturelement modifiziert dann den durch sie durchtretenden Lichtstrom auf identische Weise wie alle anderen Strukturelemente.

"Im Wesentlichen" identisch bedeutet dabei, dass bei einer ebenen Fläche, auf welcher die Strukturelemente angeordnet sind, diese tatsächlich identisch ausgebildet sind.

Bei gekrümmten Flächen, wie bei einer Lichtsaustrittsfläche 5a einer Linse 5, sind die Strukturelemente in ihrem zentralen Bereich jeweils identisch ausgebildet, während sich durch die Krümmung der Fläche die Randbereiche unterschiedlicher Strukturelemente (geringfügig) voneinander unterscheiden können.

Bei einer konkreten Ausführungsform ist entsprechend vorgesehen, alle Strukturelemente 110 in Bezug auf eine ebene bzw. als eben gedachte Fläche 111 identisch ausgebildet sind.

Entsprechend werden die Strukturelemente für eine ebene Fläche berechnet; werden diese so berechneten, identischen Strukturelemente - mit identischer Ausrichtung - auf eine gekrümmte Fläche beispielsweise einer Linse aufgesetzt, so sind wie oben schon erwähnt die Strukturelemente in ihrem zentralen Bereich nach wie vor identisch ausgebildet; in den Übergangsbereichen zu der ursprünglichen Linsenfläche, auf welche die Strukturelemente aufgesetzt sind, weisen die Strukturelemente aber ja nach Position auf der Linsenfläche auf Grund der Krümmung der Linsenoberfläche eine unterschiedliche Gestalt auf, was aber bei der geringen Größe der Strukturelemente in keinen oder nur sehr geringen Auswirkungen auf die Lichtverteilung resultiert

Weiters ist es von Vorteil, wenn alle Strukturelemente 110 identisch ausgerichtet sind.

Bei einer ebenen definierten Fläche bedarf dies keiner weiteren Erläuterungen. Bei gekrümmten Flächen (Beispiel: Linse) sind die Strukturelemente identisch entlang von Achsen durch die Fläche angeordnet, welche Achsen alle parallel zu einer Symmetrieachse oder zu einer optischen Achse der Fläche verlaufen (und nicht normal auf die Flächennormale).

Dies hat insbesondere fertigungstechnische Vorteile, da die optische Struktur und das Werkzeug zur Erzeugung der Struktur auf diese Weise einfach entfernt werden können, da sich keine Hinterschneidungen an der optischen Struktur bilden können.

Optimal lässt sich eine erfindungsgemäße optische Struktur bzw. ein modifiziertes Lichtbild erzeugen, wenn die Streufunktion PSF eine Point-Spread-Function ist.

Weiters gilt auch mit Vorteil, dass die Symmetrie eines Strukturelementes von der Symmetrie der Streufunktion PSF ab hängt. Das Strukturelement weist i.A. dieselbe Symmetrieklasse wie die PSF auf. Ist beispielsweise die PSF horizontal spiegelsymmetrisch, so weist auch das Strukturelement eine horizontale Spiegelsymmetrie auf.

Die vollständige Mikrostrukturierung der Linsenoberfläche stellt grundsätzlich einen Vorteil für sämtliche Anwendungsfälle der Mikrostruktur dar (z.B. Xenon- und LED-Projektionssysteme, segmentierte Lichtverteilung, welche über Linsen oder andere lichtformende Körper abgebildet werden, ....).

Die Eigenschaft der quadratischen Streufunktion stellt insbesondere für segmentiere Lichtverteilungen eine erhebliche Verbesserung dar ansonsten, da ohne erfindungsgemäße optische Struktur in diesem Fall die Grenzen von quadratische/rechteckigen Segmenten so verschoben werden müssten, dass alle Lücken, auch in den Ecken, geschlossen sind.

## Patentansprüche

1. Optische Struktur (100) für eine Beleuchtungsvorrichtung (1) eines Kraftfahrzeugscheinwerfer, welche Beleuchtungsvorrichtung (1) zur Abstrahlung von Licht eingerichtet ist, welches von der Beleuchtungsvorrichtung (1) abgestrahlte Licht eine vorgegebene Lichtverteilung (LV1) bildet, wobei
die optische Struktur (100) der Beleuchtungsvorrichtung (1) derart zugeordnet oder derart Teil der Beleuchtungsvorrichtung (1) ist, dass
die optische Struktur (100) von im Wesentlichen dem gesamten Lichtstrom der Beleuchtungsvorrichtung (1) durchstrahlt wird, und wobei
die optische Struktur (100) aus einer Vielzahl von optischen Strukturelementen (110) besteht, welche Strukturelemente (110) eine Licht streuende Wirkung aufweisen, und welche optische Strukturelemente (100) derart ausgebildet sind,
die - von der Beleuchtungsvorrichtung (1) erzeugte, unmodifizierte Lichtverteilung (LV1) - von der optischen Struktur (100) zu einer vorgebbaren, modifizierten Lichtverteilung (LV2) modifiziert ist,
die optischen Strukturelemente (110) eine viereckige Grundfläche (202) aufweisen, d.h., dass die Fläche (202) zwischen den Eckpunkten (201) eines viereckigen Gitters (200) vollständig von der Grundfläche von genau einem optischen Strukturelement (110) bedeckt ist,
wobei die Grundfläche der optischen Strukturelemente (110) jeweils von einem Rechteck oder von einem Quadrat gebildet ist.
**dadurch gekennzeichnet, dass**
die Strukturelemente (110) in ihren Eckbereichen eine Eckbereichs-Erhebung (110b), welche jeweils durch eine Seitenfläche einer pyramidenartigen Erhebungen (111b) gebildet, und in ihrem Zentrum eine Zentralerhebung (110a) aufweisen.

2. Optische Struktur nach Anspruch 1, **dadurch gekennzeichnet, dass** die Strukturelemente (110) in ihrem Zentrum eine Zentralerhebung (110a) mit kreisförmiger Basis aufweisen.

3. Optische Struktur nach Anspruch 1 oder 2, **dadurch gekennzeichnet, dass** die modifizierte Lichtverteilung (LV2) durch Faltung der unmodifizierten Lichtverteilung (LV1) mit einer Streufunktion (PSF) gebildet ist, und wobei die optische Struktur (100) derart ausgebildet ist, dass die unmodifizierte Lichtverteilung (LV1) entsprechend der Streufunktion modifiziert ist.

4. Optische Struktur nach einem der Ansprüche 1 bis 3, **dadurch gekennzeichnet, dass** die Strukturelemente (110) über zumindest eine, vorzugsweise genau eine definierte Fläche (111) zumindest eines, vorzugsweise genau eines Optikelementes (5, 6) verteilt sind.

5. Optische Struktur nach Anspruch 3 oder 4, **dadurch gekennzeichnet, dass** die optischen Strukturelemente (110) derart ausgebildet sind, dass jedes Strukturelement (110) das durch das Strukturelement (110) durchtretende Lichtbündel (LB1) entsprechend der Streufunktion (PSF) zu einem modifizierte Lichtbündel (LB2) modifiziert.

6. Optische Struktur nach einem der Ansprüche 1 bis 5, **dadurch gekennzeichnet, dass** sich die Basis der Zentralerhebung (110a) bis zu den vier Begrenzungsseiten (203) der viereckigen Grundfläche (202) erstreckt.

7. Optische Struktur nach einem der Ansprüche 1 bis 6, **dadurch gekennzeichnet, dass** die Zentralerhebung (110a) einen über ihre gesamte Oberfläche stetigen Verlauf aufweist und/oder ihren maximalen Abstand zu der Grundfläche im geometrischen Mittelpunkt ihrer Grundfläche aufweist und/oder ihren minimalen Abstand zu der Grundfläche an ihrem Kreisumfang aufweist, wobei der minimale Abstand des Kreisumfanges zu der Grundfläche vorzugsweise gleich Null ist.

8. Optische Struktur nach einem der Ansprüche 1 bis 7, **dadurch gekennzeichnet, dass** alle an einem Eckpunkt (201) des Gitters liegenden Strukturelemente (110) zu der pyramidenartigen Erhebung (111b) beitragen, wobei vorzugsweise die Spitze (111b') einer pyramidenartigen Erhebung (111b) exakt über einem Gitterpunkt (201) des Gitters (200) liegt.

9. Optische Struktur nach einem der Ansprüche 1 bis 8, **dadurch gekennzeichnet, dass** die optischen Strukturelemente (110) jeweils in Bezug auf ihre Diagonale symmetrisch, insbesondere spiegelsymmetrisch ausgebildet sind.

10. Optische Struktur nach einem der Ansprüche 1 bis 9, **dadurch gekennzeichnet, dass** in einem Schnitt durch ein pyramidenartige Erhebung (111b) entlang einer Ebene normale auf die Grundfläche (202) entlang einer Diagonalen (A-A) die Eckbereichs-Erhebungen (110b) einen im Wesentlichen linearen Anstieg aufweisen und/oder entlang einer Begrenzungsseite (203) die Eckbereichs-Erhebungen (110b) einen im Wesentlichen konkaven Verlauf aufweisen.

11. Optische Struktur nach einem der Ansprüche 1 bis 10, **dadurch gekennzeichnet, dass** die Zentralerhebung (110a) und die Eckbereichs-Erhebungen (110b) stetig ineinander über gehen.

12. Optische Struktur nach einem der Ansprüche 1 bis 11, **dadurch gekennzeichnet, dass** sie auf zumindest einer, vorzugsweise genau einer Grenzfläche eines Optikelementes, welches in Form einer Streuscheibe (6) oder in Form einer Abdeckscheibe (6) der Beleuchtungsvorrichtung (1) ausgebildet ist, angeordnet ist und/oder auf zumindest einer Oberfläche eines Optikelementes in Form einer Linse (5), vorzugsweise auf der Lichtaustrittsseite (5a) der Linse (5), insbesondere einer Projektionslinse, der Beleuchtungsvorrichtung (1) angeordnet ist, wobei die Strukturelemente (110) der optischen Struktur (100) vorzugsweise über die gesamte zumindest eine Grenzfläche (5a, 6a) des Optikelementes (5, 6) verteilt sind und/oder im Wesentlichen, vorzugsweise in Bezug auf eine ebene bzw. als eben gedachte Fläche (111), identisch ausgebildet sind und/oder identisch ausgerichtet sind.

13. Optische Struktur nach einem der Ansprüche 1 bis 12, **dadurch gekennzeichnet, dass** die Streufunktion (PSF) eine Point-Spread-Function ist.

14. Optische Struktur nach einem der Ansprüche 1 bis 13, **dadurch gekennzeichnet, dass** die Abmessung eines Strukturelementes (110), beispielsweise ein Durchmesser (d) und/oder eine Höhe (h) und/oder eine Länge der Strukturelemente (110), größer, insbesondere sehr viel größer als die Wellenlänge von sichtbarem Licht ist, wobei die Höhe (h) vorzugsweise im µm-Bereich, vorzugsweise im Bereich von 0,5 - 5 µm, beispielsweise im Bereich von 1 - 3 µm liegt, insbesondere ca. 2,7 µm beträgt und der Durchmesser (d) bzw. die Länge vorzugsweise im Millimeter-Bereich, beispielsweise zwischen 0,5 - 2 mm liegt, insbesondere ca. 1 mm beträgt.

15. Optische Struktur nach einem der Ansprüche 1 bis 14, **dadurch gekennzeichnet, dass** die definierte Fläche (111), auf welcher die Strukturelemente (110) verteilt sind, in eine - gedachte -, vorzugsweise regelmäßige Gitterstruktur (200) unterteilt ist, und wobei die Strukturelemente an den Gitterpunkten (201) oder zwischen den Gitterpunkten (201) der Gitterstruktur (200) angeordnet sind, wobei vorzugsweise an jedem Gitterpunkt (201) oder zwischen den Gitterpunkten (201) der Gitterstruktur (200) jeweils genau ein Strukturelement (110) angeordnet ist, und insbesondere an benachbarte Strukturelemente (110) ineinander übergehend, d.h. einander berührend angeordnet sind oder die Strukturelemente (110) voneinander isoliert, d.h. einander nicht berührend angeordnet sind, wobei benachbarte Gitterpunkte (201) beispielsweise einen Abstand von ca. 0,5 - 2mm, vorzugsweise von ca. 1 mm zueinander aufweisen.

16. Optische Struktur nach einem der Ansprüche 1 bis 15, **dadurch gekennzeichnet, dass** der Übergang der Strukturelemente (110) zu der definierten Fläche (111) stetig, vorzugsweise C2-stetig erfolgt.

17. Optische Struktur nach einem der Ansprüche 1 bis 16 für eine Beleuchtungsvorrichtung (1), welche Beleuchtungsvorrichtung (1) dazu eingerichtet ist, das von ihr abgestrahlte Licht in Form einer abgeblendeten Lichtverteilung (LV1), insbesondere einer Abblendlichtverteilung, abzubilden, wobei die abgeblendete Lichtverteilung (LV1), insbesondere die Abblendlichtverteilung eine Hell-Dunkel-Grenze (HD1) aufweist,
**dadurch gekennzeichnet, dass**
die optische Struktur (100), insbesondere die Strukturelemente (110) derart ausgebildet ist/sind bzw. die Streufunktion derart ausgestaltet ist, dass der Gradient der Hell-Dunkel-Grenze (HD1) der - unmodifizierten - Lichtverteilung (LV1) der Beleuchtungsvorrichtung (1) reduziert ist.

18. Optische Struktur nach einem der Ansprüche 1 bis 17 für eine Beleuchtungsvorrichtung (1), welche Beleuchtungsvorrichtung (1) dazu eingerichtet ist, das von ihr abgestrahlte Licht in Form einer abgeblendeten Lichtverteilung (LV1), insbesondere einer Abblendlichtverteilung, abzubilden, wobei die abgeblendete Lichtverteilung, insbesondere die Abblendlichtverteilung eine Hell-Dunkel-Grenze (HD1) aufweist,
**dadurch gekennzeichnet, dass**
die optische Struktur (100), insbesondere die Strukturelemente (110) derart ausgebildet ist/sind bzw. die Streufunktion derart ausgestaltet ist, dass ein Anteil des Lichtstroms der Beleuchtungsvorrichtung (1) in einen Bereich (LV2') oberhalb der Hell-Dunkel-Grenze (HD1, HD2) abgebildet wird, wobei vorzugsweise der abgelenkte Lichtstrom in einem Bereich (LV2') zwischen 1,5° und 4°, insbesondere zwischen 2° und 4° über der HH-Linie liegt, wobei vorzugsweise von der optischen Struktur ca. 1 % des Lichtstroms der Beleuchtungsvorrichtung (1) in einen Bereich (LV2') oberhalb der Hell-Dunkel-Grenze (HD1, HD2) abgelenkt wird.

19. Optische Struktur nach einem der Ansprüche 1 bis 16 für eine Beleuchtungsvorrichtung (1), welche Beleuchtungsvorrichtung (1) dazu eingerichtet ist, das von ihr abgestrahlte Licht in Form von in n Zeilen und m Spalten abgebildeten Einzellicht-Verteilungen (LS1) abzubilden, wobei n > 1, m ≥ 1 oder n ≥1, m> 1 gilt, und welche Einzellicht-Verteilungen (LS1) gemeinsam eine Gesamtlichtverteilung (LV1), beispielsweise eine Fernlichtverteilung bilden,
**dadurch gekennzeichnet, dass**
die optische Struktur (100), insbesondere die Strukturelemente (110) derart ausgebildet ist/sind bzw. die Streufunktion derart ausgestaltet ist, dass zumindest ein Teil des Lichtstroms der Beleuchtungsvorrichtung (1) in die Grenzbereiche, in welchen jeweils zwei Einzellicht-Verteilungen aneinandergrenzen, abgelenkt wird, wobei benachbarte Einzellicht-Verteilungen (LS1) der unmodifizierten Lichtverteilung (LV1) vorzugsweise einen definierten Abstand bzw. definierte Abstände (d1, d2) zueinander aufweisen, wobei vorzugsweise alle Abstände (d1, d2) zwischen benachbarten Einzellicht-Verteilungen (LS1) in horizontaler und/oder in vertikaler Richtung identisch sind und beispielsweise kleiner gleich 0,5° und größer 0°, beispielsweise kleiner gleich 0,2°, sind, vorzugsweise zwischen 0,05° und 0,15° liegen, insbesondere kleiner gleich 0,1° ist, wobei die Einzellicht-Verteilungen (LS1) der unmodifizierten Lichtverteilung (LV1) beispielsweise, insbesondere bei einer Projektion auf eine vertikale Ebene, eine rechtseckige oder quadratische Form, und vorzugsweise eine Breite und/oder eine Höhe von ca. 1°, aufweisen.

20. Optische Struktur nach Anspruch 19, **dadurch gekennzeichnet, dass** die durchschnittliche Lichtintensität in einem Spalt zwischen zwei Einzelllicht-Verteilungen (LS1), erzeugt mit dem Lichtstrom, der für eine Einzellicht-Verteilung bestimmt ist, der halben durchschnittlichen Lichtintensität in einer angrenzenden Einzellicht-Verteilung (LS1) der modifizierten Lichtverteilung entspricht.

21. Optische Struktur nach Anspruch 19 oder 20, **dadurch gekennzeichnet, dass** durch die optische Struktur ein Teil jenes Lichtstroms, welcher ohne optische Struktur ausschließlich eine Einzellicht-Verteilung (LS1) erzeugt, in die diese Einzellicht-Verteilung (LS1) einrahmenden Spaltenbereiche, welche sich durch die Beabstandung der Einzellicht-Verteilungen (LS1) zueinander ergeben, abgelenkt wird, wobei vorzugsweise ausgehend von einer betrachteten Einzellicht-Verteilung (LS1) die Lichtintensität in einem angrenzenden Spalt in Richtung der benachbarten Einzellicht-Verteilung (LS1) hin abnimmt, wobei die Abnahme vorzugsweise linear verläuft, wobei die Lichtintensität beispielsweise auf Null abnimmt und vorzugsweise in einem Spalt, unmittelbar an den Rand der betrachteten Einzellicht-Verteilung (LS1) angrenzend, im Wesentlichen der Lichtintensität der Einzellicht-Verteilung (LS1) der modifizierten Lichtverteilung an ihrem Rand bzw. der durchschnittlichen Lichtintensität in der Einzellicht-Verteilung (LS1) der modifizierten Lichtverteilung entspricht.

22. Optische Struktur nach einem der Ansprüche 1 bis 21, **dadurch gekennzeichnet, dass** sie derart angeordnet und/oder ausgebildet ist, dass im Wesentlichen der gesamte, vorzugsweise der gesamte Lichtstrom der Beleuchtungsvorrichtung (1) auf die optische Struktur (100) auftrifft.

23. Optische Struktur nach einem der Ansprüche 1 bis 22, **dadurch gekennzeichnet, dass** sie derart angeordnet und/oder ausgebildet ist, dass sie im Wesentlichen homogen ausgeleuchtet ist.

24. Beleuchtungsvorrichtung mit zumindest einer, vorzugsweise genau einer optischen Struktur (100) nach einem der Ansprüche 1 bis 23, **dadurch gekennzeichnet, dass** die Beleuchtungsvorrichtung (1) ein Projektionssystem ist, welches beispielsweise zumindest eine Lichtquelle (3), zumindest einen Reflektor (2) und zumindest eine Linse (5), insbesondere eine Projektionslinse umfasst, wobei die zumindest eine optische Struktur (100) beispielsweise auf der Linse (5) und/oder einer zusätzlichen Abdeck- oder Streuscheibe angeordnet ist oder ein Reflexionssystem ist, welches beispielsweise zumindest einen Freiform-Reflektor (2) und zumindest einen Lichtquelle (3) sowie zumindest eine Streuscheibe (6) und/oder zumindest eine Abdeckscheibe (6) umfasst, wobei die zumindest eine optische Struktur (100) beispielsweise auf der zumindest einen Streuscheibe (6) und/oder der zumindest einen Abdeckscheibe (6) und/oder einer zusätzlichen Abdeck- oder Streuscheibe angeordnet ist.

25. Fahrzeugscheinwerfer mit zumindest einer Beleuchtungsvorrichtung nach Anspruch 24.

## Claims

1. An optical structure (100) for a motor vehicle headlight lighting device (1) that is set up to emit light forming a specified light pattern (LV1), wherein
the optical structure (100) of the lighting device (1) is associated with the lighting device (1), or is part of it in such a way, that
the optical structure (100) is transilluminated by essentially the entire luminous flux of the lighting device (1), and wherein
the optical structure (100) consists of a number of optical structural elements (110) that have a light-scattering effect and that are designed in such a way that
the unmodified light pattern (LV1) produced by the lighting device (1) is modified by the optical structure (100) into a specifiable modified light pattern (LV2),
the optical structural elements (110) have a quadrilateral base area (202), i.e., the area (202) between the vertices (201) of a quadrilateral grid (200) is completely covered by the base area of exactly one optical structural element (110),
wherein the base area of each optical structural element (110) is formed by a rectangle or a square,
**characterized in that**
the structural elements (110) have, in their vertex areas, vertex area elevations (110b), each of which is formed by a lateral face of a pyramidal elevation (111b), and have, in their centers, a central elevation (110a).

2. The optical structure described in claim 1, **characterized in that** the structural elements (110) have, in their centers, a central elevation (110a) with a circular base.

3. The optical structure described in claim 1 or 2, **characterized in that** the modified light pattern (LV2) is formed by convolution of the unmodified light pattern (LV1) with a spread function (PSF), and **in that** the optical structure (100) is designed in such a way that the unmodified light pattern (LV1) is modified according to the spread function.

4. The optical structure described in one of claims 1 through 3, **characterized in that** the structural elements (110) are distributed over at least one, preferably exactly one, defined surface (111) of at least one, preferably exactly one optical element (5, 6).

5. The optical structure described in claim 3 or 4, **characterized in that** the optical structural elements (110) are designed in such a way that every structural element (110) modifies the light beam (LB1) passing through it according to the spread function (PSF) to produce a modified light beam (LB2).

6. The optical structure described in one of claims 1 through 5, **characterized in that** the base of the central elevation (110a) extends to the four delimiting sides (203) of the quadrilateral base area (202).

7. The optical structure described in one of claims 1 through 6, **characterized in that** the central elevation (110a) has a continuous course over its entire surface and/or the central elevation (110a) has its maximum distance to the base area at the geometric center of its base area and/or the central elevation (110a) has its minimum distance to the base area on its circumference, wherein the minimum distance of the circumference to the base area is preferably equal to zero.

8. The optical structure described in one of claims 1 through 7, **characterized in that** all structural elements (110) lying on a vertex (201) of the grid contribute to the pyramidal elevation (111b), wherein the apex (111b') of a pyramidal elevation (111b) preferably lies exactly over a grid point (201) of the grid (200).

9. The optical structure described in one of claims 1 through 8, **characterized in that** each of the optical structural elements (110) is designed to be symmetrical about its diagonal, in particular to have mirror symmetry.

10. The optical structure described in one of claims 1 through 9, **characterized in that** in a section through a pyramidal elevation (111b) in a plane normal to the base area (202) along a diagonal (A-A) the vertex area elevations (110b) have an essentially linear slope and/ or along a delimiting side (203) the vertex area elevations (110b) have an essentially concave course.

11. The optical structure described in one of claims 1 through 10 **characterized in that** the central elevation (110a) and the vertex area elevations (110b) continuously transition into one another.

12. The optical structure described in one of claims 1 through 11, **characterized in that** it is arranged on at least one, preferably exactly one boundary surface of an optical element that is designed in the form of a headlight lens (6) or in the form of a cover plate (6) of the lighting device (1) and/or on at least one surface of an optical element in the form of a lens (5), in particular on the light exit side (5a) of the lens (5), in particular a projector lens of the lighting device (1), wherein the structural elements (110) of the optical structure (100) are distributed preferably over the entire at least one boundary surface (5a, 6a) of an optical element (5, 6) and/or all structural elements (110) are essentially, preferably with respect to a planar surface or an imaginary planar surface (111), identical and/or are identically oriented.

13. The optical structure described in one of claims 1 through 12, **characterized in that** the spread function is a point spread function (PSF).

14. The optical structure described in one of claims 1 through 13, **characterized in that** the dimension of a structural element (110), for example a diameter (d) and/or a height (h) and/or a length of the structural elements (110) of the structural element (110), is greater, especially very much greater than the wavelength of visible light, wherein the height (h) of the structural elements (110) preferably lies in the µm range, more preferably in the range 0.5-5 µm, in particular in the range 1-3 µm, even more preferably the height (h) of the structural elements (110) is about 2.7 µm and the diameter (d) or a length of the structural elements (110) lies in the millimeter range, preferably between 0.5-2 mm, in particular, the diameter (d) or a length of the structural elements (110) is about 1 mm.

15. The optical structure described in one of claims 1 through 14, **characterized in that** the defined surface (111) on which the structural elements (110) are distributed is subdivided into an imaginary, preferably regular grid structure (200), and **in that** the structural elements are arranged on the grid points (201) or between the grid points (201) of the grid structure (200), wherein preferably exactly one structural element (110) is arranged on each grid point (201) or between the grid points (201) of the grid structure (200) and, in particular, adjacent structural elements (110) change into one another, i.e., they are arranged to touch one another, or the structural elements (110) are isolated from one another, i.e., are arranged not to touch one another, wherein adjacent grid points (201) are preferably separated by about 0.5-2 mm, preferably by about 1 mm.

16. The optical structure described in one of claims 1 through 15, **characterized in that** the transition of the structural elements (110) to the defined surface (111) is continuous, preferably of continuity class C2.

17. The optical structure described in one of claims 1 through 16 for a lighting device (1) that is set up to project the light emitted from it in the form of a masked light pattern (LV1), in particular a low beam pattern, the masked light pattern (LV1), in particular the low beam pattern, having a light / dark boundary (HD1),
**characterized in that**
the optical structure (100), in particular the structural elements (110) or the spread function is/are designed in such a way to reduce the gradient of the light / dark boundary (HD1) of the unmodified light pattern (LV1) of the lighting device (1).

18. The optical structure described in one of claims 1 through 17 for a lighting device (1) that is set up to project the light emitted from it in the form of a masked light pattern (LV1), in particular a low beam pattern, the masked light pattern, in particular the low beam pattern, having a light / dark boundary (HD1),
**characterized in that**
the optical structure (100), in particular the structural elements (110) or the spread function is/are designed in such a way that part of the luminous flux of the lighting device (1) is projected into an area (LV2') above the light / dark boundary (HD1, HD2), wherein the deflected luminous flux preferably lies in an area (LV2') between 1.5° and 4°, especially between 2° and 4° above the HH-line, wherein it preferably deflects about 1% of the luminous flux of the lighting device (1) into an area (LV2') above the light / dark boundary (HD1, HD2).

19. The optical structure described in one of claims 1 through 16 for a lighting device (1) that is set up to project the light emitted from it in the form of individual light patterns (LS1) that are imaged in n rows and m columns, where n > 1, m ≥ 1 or n ≥ 1, m > 1, and that together form an entire light pattern (LV1), for example a high beam pattern,
**characterized in that**
the optical structure (100), in particular the structural elements (110) or the spread function is/are designed in such a way that at least part of the luminous flux of the lighting device (1) is deflected into the border areas, in each of which two individual light patterns border one another, wherein adjacent individual light patterns (LS1) of the unmodified light pattern (LV1) preferably have a defined distance(s) (d1, d2) to one another, wherein all distances (d1) between adjacent individual light patterns (LS1) are preferably identical in the horizontal and/or vertical direction and, in particular, are less than or equal to 0.5° and greater than 0°, preferably less than or equal to 0.2°, more preferably lie between 0.05° and 0.15°, in particular, are less than or equal to 0.1°, wherein the individual light patterns (LS1) of the unmodified light pattern (LV1), preferably have a rectangular or square shape, especially when projected onto a vertical plane, and, in particular, have a width and/or a height of about 1°.

20. The optical structure described in claim 19, **characterized in that** the average luminous intensity in a gap between two individual light patterns (LS1) produced with the luminous flux that is intended for an individual light pattern corresponds to half the average luminous intensity in a bordering individual light pattern (LS1) of the modified light pattern.

21. The optical structure described in one of claims 19 or 20, **characterized in that** it deflects part of that luminous flux that would, without an optical structure, produce exclusively one individual light pattern (LS1), into the gap areas that frame this individual light pattern (LS1) and that result from the spacing apart of the individual light patterns (LS1) from one another, wherein, in particular, starting from a viewed individual light pattern (LS1), the luminous intensity in a bordering gap decreases in the direction toward the adjacent individual light pattern (LS1), this decrease preferably having a linear course, wherein the luminous intensity preferably decreases to zero, and, in particular, in a gap directly bordering the edge of the viewed individual light pattern (LS1) essentially corresponds to the luminous intensity of the individual light pattern (LS1) of the modified light pattern at its edge or the average luminous intensity in the individual light pattern (LS1) of the modified light pattern.

22. The optical structure described in one of claims 1 through 21, **characterized in that** it is arranged and/or designed in such a way that essentially the entire luminous flux, preferably the entire luminous flux of the lighting device (1) impinges on the optical structure (100).

23. The optical structure described in one of claims 1 through 22, **characterized in that** it is arranged and/or designed in such a way that it is essentially homogeneously illuminated.

24. A lighting device with at least one, preferably exactly one optical structure (100) described in one of claims 1 through 23, **characterized in that** the lighting device is a projection system, which preferably comprises at least one light source (3), at least one reflector (2), and at least one lens (5), in particular a projector lens, wherein the at least one optical structure (100) is preferably arranged on the lens (5) and/or on an additional cover plate or headlight lens or a reflecting system, which preferably comprises at least one freeform reflector (2) and at least one light source (3) and at least one headlight lens (6) and/or at least one cover plate (6), wherein the at least one optical structure (100) is preferably arranged on the at least one headlight lens (6) and/or the at least one cover plate (6) and/or an additional cover plate or headlight lens.

25. A vehicle headlight with at least one lighting device described in claim 24.

## Revendications

1. - Structure optique (100) pour un dispositif d'éclairage (1) d'un phare de véhicule automobile, lequel dispositif d'éclairage (1) est conçu pour projeter de la lumière, laquelle lumière projetée par le dispositif d'éclairage (1) forme une répartition de lumière (LV1) prédéfinie, dans laquelle
la structure optique (100) est associée au dispositif d'éclairage (1) ou est une partie du dispositif d'éclairage (1) de manière telle que
la structure optique (100) est traversée sensiblement par la totalité du flux de lumière du dispositif d'éclairage (1), et
la structure optique (100) étant composée d'une pluralité d'éléments structuraux optiques (110), lesquels éléments structuraux (110) présentent un effet de dispersion de lumière, et lesquels éléments structuraux optiques (100) sont formés de manière telle que
la répartition de lumière non modifiée (LV1), générée par le dispositif d'éclairage (1) est modifiée par la structure optique (100) en une répartition de lumière modifiée (LV2) prédéfinie,
les éléments structuraux optiques (110) présentent une surface de base quadrangulaire (202), c'est-à-dire que la surface (202) entre les points angulaires (201) d'une grille quadrangulaire (200) est entièrement recouverte par la surface de base de précisément un élément structural optique (110),
la surface de base de chaque élément structural optique (110) étant formée par un rectangle ou par un carré,
**caractérisée par le fait que**
les éléments structuraux (110) présentent, dans leurs zones angulaires, une élévation de zone angulaire (110b), dont chacune est formée par une surface latérale d'une élévation pyramidale (111b), et dans leur centre, une élévation centrale (110a).

2. - Structure optique selon la revendication 1, **caractérisée par le fait que** les éléments structuraux (110) présentent, dans leur centre, une élévation centrale (110a) ayant une base circulaire.

3. - Structure optique selon l'une des revendications 1 ou 2, **caractérisée par le fait que** la répartition de lumière modifiée (LV2) est formée par convolution de la répartition de lumière non modifiée (LV1) avec une fonction de dispersion (PSF), et dans laquelle la structure optique (100) est formée de telle sorte que la répartition de lumière non modifiée (LV1) est modifiée conformément à la fonction de dispersion.

4. - Structure optique selon l'une des revendications 1 à 3, **caractérisée par le fait que** les éléments structuraux (110) sont répartis sur au moins une, de préférence exactement une surface définie (111) d'au moins un, de préférence d'exactement un élément optique (5, 6).

5. - Structure optique selon l'une des revendications 3 ou 4, **caractérisée par le fait que** les éléments structuraux optiques (110) sont formés de telle sorte que chaque élément structural (110) modifie le faisceau de lumière (LB1) passant à travers l'élément structural (110) conformément à la fonction de dispersion (PSF) pour produire un faisceau de lumière modifié (LB2).

6. - Structure optique selon l'une des revendications 1 à 5, **caractérisée par le fait que** la base de l'élévation centrale (110a) s'étend jusqu'aux quatre côtés de délimitation (203) de la surface de base quadrangulaire (202).

7. - Structure optique selon l'une des revendications 1 à 6, **caractérisée par le fait que** l'élévation centrale (110a) présente un parcours continu sur toute sa surface et/ou présente sa distance maximale par rapport à la surface de base dans le centre géométrique de sa surface de base et/ou présente sa distance minimale par rapport à la surface de base sur sa circonférence, la distance minimale de la circonférence à la surface de base étant de préférence égale à zéro.

8. - Structure optique selon l'une des revendications 1 à 7, **caractérisée par le fait que** tous les éléments structuraux (110) se trouvant sur un point angulaire (201) de la grille contribuent à l'élévation pyramidale (111b), où, de préférence, le sommet (111b') d'une élévation pyramidale (111b) se situe exactement au-dessus d'un point de grille (201) de la grille (200).

9. - Structure optique selon l'une des revendications 1 à 8, **caractérisée par le fait que** chacun des éléments structuraux optiques (110) est formé pour être symétrique par rapport à sa diagonale, en particulier pour avoir une symétrie miroir.

10. - Structure optique selon l'une des revendications 1 à 9, **caractérisée par le fait que,** dans une section à travers une élévation pyramidale (111b) dans un plan perpendiculaire à la surface de base (202) le long d'une diagonale (A-A), les élévations de zone angulaire (110b) présentent une pente sensiblement linéaire et/ou le long d'un côté de délimitation (203), les élévations de zone angulaire (110b) présentent un parcours sensiblement concave.

11. - Structure optique selon l'une des revendications 1 à 10, **caractérisée par le fait que** l'élévation centrale (110a) et les élévations de zone angulaire (110b) se fondent de façon continue.

12. - Structure optique selon l'une des revendications 1 à 11, **caractérisée par le fait qu'**elle est disposée sur au moins une, de préférence exactement une surface de délimitation d'un élément optique, lequel est réalisé sous la forme d'un verre diffusant (6) ou sous la forme d'un verre de recouvrement (6) du dispositif d'éclairage (1) et/ou est disposée sur au moins une surface d'un élément optique sous la forme d'une lentille (5), de préférence sur le côté sortie de lumière (5a) de la lentille (5), en particulier d'une lentille de projection, du dispositif d'éclairage (1), les éléments structuraux (110) de la structure optique (100) étant répartis de préférence sur la totalité de la au moins une surface de délimitation (5a, 6a) de l'élément optique (5, 6) et/ou sont réalisés de manière sensiblement identique, de préférence par rapport à une surface plane ou imaginaire plane (111) et/ou sont orientés de manière identique.

13. - Structure optique selon l'une des revendications 1 à 12, **caractérisée par le fait que** la fonction de dispersion (PSF) est une fonction d'étalement ponctuel.

14. - Structure optique selon l'une des revendications 1 à 13, **caractérisée par le fait que** la dimension d'un élément structural (110), par exemple un diamètre (d) et/ou une hauteur (h) et/ou une longueur des éléments structuraux (110), est plus grande, en particulier beaucoup plus grande que la longueur d'onde de lumière visible, la hauteur (h) se situant de préférence dans la plage des µm, de préférence dans la plage de 0,5-5 µm, par exemple dans la plage de 1-3 µm, en particulier s'élevant à environ 2,7 µm, et le diamètre (d) ou la longueur se situant de préférence dans la plage des millimètres, par exemple entre 0,5-2 µm, en particulier s'élevant à environ 1 mm.

15. - Structure optique selon l'une des revendications 1 à 14, **caractérisée par le fait que** la surface définie (111), sur laquelle les éléments structuraux (110) sont répartis, est subdivisée en une structure de grille imaginaire, de préférence régulière (200), et dans laquelle les éléments structuraux sont disposés aux points de grille (201) ou entre les points de grille (201) de la structure de grille (200), où, de préférence, sur chaque point de grille (201) ou entre les points de grille (201) de la structure de grille (200) à chaque fois exactement un élément structural (110) est disposé, et en particulier des éléments structuraux adjacents (110) se changent l'un en l'autre, à savoir sont disposés pour se toucher e ou les éléments structuraux (110) sont isolés les uns des autres, à savoir sont disposés pour ne pas se toucher, des points de grille (201) adjacents étant séparés par exemple d'une distance d'environ 0,5-2 mm, de préférence d'environ 1 mm.

16. - Structure optique selon l'une des revendications 1 à 15, **caractérisée par le fait que** la transition des éléments structuraux (110) en la surface définie (111) est continue, de préférence de continuité de classe C2.

17. - Structure optique selon l'une des revendications 1 à 16 pour un dispositif d'éclairage (1), lequel dispositif d'éclairage (1) est conçu pour imager la lumière projetée par celui-ci sous la forme d'une répartition de lumière (LV1) affaiblie, en particulier d'une répartition de feu de croisement, la répartition de lumière (LV1) affaiblie, en particulier la répartition de feu de croisement, présentant une ligne de coupure clair-sombre (HD1),
**caractérisée par le fait que**
la structure optique (100), en particulier les éléments structuraux (110) est formée/sont formés ou la fonction de dispersion est conçue de telle sorte que le gradient de la ligne de coupure clair-sombre (HD1) de la répartition de lumière (LV1) - non modifiée - du dispositif d'éclairage (1) est réduit.

18. - Structure optique selon l'une des revendications 1 à 17 pour un dispositif d'éclairage (1), lequel dispositif d'éclairage (1) est conçu pour imager la lumière projetée par celui-ci sous la forme d'une répartition de lumière (LV1) affaiblie, en particulier d'une répartition de feu de croisement, la répartition de lumière affaiblie, en particulier la répartition de feu de croisement présentant une ligne de coupure clair-sombre (HD1),
**caractérisée par le fait que**
la structure optique (100), en particulier les éléments structuraux (110) est formée/sont formés ou la fonction de dispersion est conçue de telle sorte qu'une partie du flux de lumière du dispositif d'éclairage (1) est imagée dans une zone (LV2') au-dessus de la ligne de coupure clair-sombre (HD1, HD2), où, de préférence, le flux de lumière dévié se situe dans une zone (LV2') entre 1,5° et 4°, en particulier entre 2° et 4° au-dessus de la ligne HH, où, de préférence, environ 1 % du flux de lumière du dispositif d'éclairage (1) est dévié par la structure optique dans une zone (LV2') au-dessus de la ligne de coupure clair-sombre (HD1, HD2).

19. - Structure optique selon l'une des revendications 1 à 16 pour un dispositif d'éclairage (1), lequel dispositif d'éclairage (1) est conçu pour imager la lumière projetée par celui-ci sous la forme de distributions de lumière individuelles (LS1) imagées en n rangées et m colonnes, où n > 1, m ≥ 1 ou n ≥ 1, m > 1, et lesquelles répartitions de lumière individuelles (LS1) forment ensemble une répartition de lumière totale (LV1), par exemple une répartition de feu de route,
**caractérisée par le fait que**
la structure optique (100), en particulier les éléments structuraux (110) est formée/sont formés ou la fonction de dispersion est conçue de telle sorte qu'au moins une partie du flux de lumière du dispositif d'éclairage (1) est déviée dans les zones de délimitation dans chacune desquelles deux répartitions de lumière individuelles sont adjacentes, où des répartitions de lumière individuelles (LS1) adjacentes de la répartition de lumière (LV1) non modifiée présentent de préférence une distance définie ou des distances définies (d1, d2) l'une par rapport à l'autre, où, de préférence, toutes les distances (d1, d2) entre des répartitions de lumière individuelles (LS1) adjacentes sont identiques dans la direction horizontale et/ou dans la direction verticale et par exemple sont inférieures ou égales à 0,5° et supérieures à 0°, par exemple inférieures ou égales à 0,2°, de préférence se situent entre 0,05° et 0,15°, en particulier sont inférieures ou égales à 0,1°, les répartitions de lumière individuelles (LS1) de la répartition de lumière (LV1) non modifiée présentant par exemple, en particulier lors d'une projection sur un plan vertical, une forme rectangulaire ou carrée, et, de préférence, une largeur et/ou une hauteur d'environ 1°.

20. - Structure optique selon la revendication 19, **caractérisée par le fait que** l'intensité lumineuse moyenne dans un intervalle entre deux répartitions de lumière individuelles (LS1), produite par le flux de lumière qui est déterminé pour une répartition de lumière individuelle, correspond à la moitié de l'intensité lumineuse moyenne dans une répartition de lumière individuelle (LS1) adjacente de la répartition de lumière modifiée.

21. - Structure optique selon l'une des revendications 19 ou 20, **caractérisée par le fait qu'**une partie du flux de lumière, qui, sans structure optique, produit exclusivement une répartition de lumière individuelle (LS1), est déviée par la structure optique dans les zones d'intervalle qui encadrent cette répartition de lumière individuelle (LS1), lesquelles résultent de l'espacement des répartitions de lumière individuelles (LS1) l'une de l'autre, où, de préférence, à partir d'une répartition de lumière individuelle (LS1) considérée l'intensité lumineuse dans un intervalle de limite diminue dans la direction de la répartition de lumière individuelle (LS1) adjacente, la diminution ayant de préférence un parcours linéaire, l'intensité lumineuse diminuant par exemple jusqu'à zéro et de préférence dans un intervalle limitant directement le bord de la répartition de lumière individuelle (LS1) considérée correspondant sensiblement à l'intensité lumineuse de la répartition de lumière individuelle (LS1) de la répartition de lumière modifiée à son bord ou à l'intensité lumineuse moyenne dans la répartition de lumière individuelle (LS1) de la répartition de lumière modifiée.

22. - Structure optique selon l'une des revendications 1 à 21, **caractérisé par le fait qu'**elle est disposée et/ou formée de telle sorte qu'essentiellement le flux de lumière total, de préférence le flux de lumière total du dispositif d'éclairage (1) frappe la structure optique (100).

23. - Structure optique selon l'une des revendications 1 à 22, **caractérisé par le fait qu'**elle est disposée et/ou formée d'une manière telle qu'elle est éclairée de manière sensiblement homogène.

24. - Dispositif d'éclairage ayant au moins une, de préférence exactement une structure optique (100) selon l'une des revendications 1 à 23, **caractérisé par le fait que** le dispositif d'éclairage (1) est un système de projection, lequel comporte par exemple au moins une source de lumière (3), au moins un réflecteur (2) et au moins une lentille (5), en particulier une lentille de projection, ladite au moins une structure optique (100) étant disposée par exemple sur la lentille (5) et/ou sur un verre de recouvrement ou diffusant supplémentaire, ou est un système de réflexion, lequel comporte par exemple comporte au moins un réflecteur de forme libre (2) et au moins une source de lumière (3) ainsi qu'au moins un verre diffusant (6) et/ou au moins un verre de recouvrement (6), ladite au moins une structure optique (100) étant disposée par exemple sur ledit au moins un verre diffusant (6) et/ou sur ledit au moins un verre de recouvrement (6) et/ou sur un verre de recouvrement ou diffusant supplémentaire.

25. - Phare de véhicule automobile comportant au moins un dispositif d'éclairage selon la revendication 24.
